# EUROPÄISCHE PATENTSCHRIFT

(11) **EP 0 910 483 B1**
(45) Veröffentlichungstag und Bekanntmachung des Hinweises auf die Patenterteilung: **25.09.2002**
(21) Anmeldenummer: 97925063.6
(22) Anmeldetag: 07.06.1997
(51) Int. Cl.: B05D 7/16, B05D 7/00

(54) **VERFAHREN ZUR HERSTELLUNG VON MEHRSCHICHTLACKIERUNGEN AUF ELEKTRISCH LEITFÄHIGEN SUBSTRATEN**
METHOD OF APPLYING SEVERAL COATS TO ELECTRICALLY CONDUCTING SUBSTRATES
PROCEDE DE PEINTURE MULTICOUCHE DE SUBSTRATS ELECTRIQUEMENT CONDUCTEURS

(30) Priorität: 12.06.1996 DE 19623369; 12.07.1996 DE 19628361
(43) Veröffentlichungstag der Anmeldung: 28.04.1999
(73) Patentinhaber: E.I. DU PONT DE NEMOURS AND COMPANY, Wilmington Delaware 19898 (US)
(72) Erfinder: LIEVERZ, Frank, D-42107 Wuppertal (DE); DÜCOFFRE, Volker, D-42119 Wuppertal (DE); RUNKEL, Andreas, D-42105 Wuppertal (DE); KÄLKE, Herbert, D-45472 Mülheim an der Ruhr (DE); GÖLDNER, Wolfgang, D-42555 Velbert (DE); SCHUBERT, Walter, D-42349 Wuppertal (DE)
(74) Vertreter: Hrabal, Ulrich, Dr.
(86) Internationale Anmeldenummer: EP9702974
(87) Internationale Veröffentlichungsnummer: WO97047402

(56) Entgegenhaltungen:
- EP-A- 0 265 363
- WO-A-91/12899
- DE-A- 4 223 182

## Beschreibung

Die Erfindung betrifft ein Verfahren zur Herstellung mehrschichtiger Lackierungen leitfähiger, z.B. metallischer Substrate, insbesondere zur Kraftfahrzeuglackierung sowie die Anwendung des Verfahrens innerhalb einer in industriellem Maßstab betriebenen Lackieranlage, insbesondere die Anwendung in einer Anlage zur Autoserienlackierung.

Heutige, hochwertige Kraftfahrzeugserienlackierungen bestehen im allgemeinen aus einer elektrophoretisch aufgebrachten vor Korrosion und Steinschlag schützenden Grundierung, einer nachfolgenden vor Steinschlag schützenden und die Oberfläche glättenden Füllerschicht und einer anschließend aufgebrachten dekorativen Zwecken dienenden Zweischichtlackierung aus farb- und/oder effektgebender Basislackschicht und einer die Oberfläche versiegelnden schützenden Klarlackschicht. In der Praxis werden die Lackieranlagen dabei oftmals mit mehreren der nachfolgenden Decklackierung im Farbton angepaßten, unterschiedlich pigmentierten Füllern und mit der das Farbtonprogramm der Lackierungen bestimmenden Anzahl an unifarbenen und Effektbasislacken betrieben.

Die EP-A-0 265 363 beschreibt ein Verfahren zur Vermeidung der Vergilbung einer Mehrschichtlackierung, wobei eine Grundierung in Form eines eingebrannten kathodischen Tauchlacks, welcher als Vernetzer spezielle blockierte Polyisocyanate enthält, mit einem handelsüblichen pigmentierten Basislack und einem handelsüblichen Klarlack im Naß-in-Naß-Verfahren überlackiert wird. Eine Füllerschicht entfällt. Es hat sich im Rahmen der vorliegenden Erfindung gezeigt, daß die direkte Überlackierung einer eingebrannten Elektrotauchlackschicht mit einer Zweischichtlackierung aus einem üblichen mit Melaminharz vernetzenden, lösemittelhaltigen Basislack auf Acrylharz- oder Polyesterharzbasis und einem üblichen Klarlack eine Mehrschichtlackierung liefert, die das heute für Kraftfahrzeugerstlackierungen geforderte Eigenschaftsniveau, insbesondere Steinschlagschutzniveau nicht erreicht.

Aus der DE-C-42 23 182 sind wäßrige Überzugsmittel bekannt, die Polyesteroligomer-Polyacrylate als Bindemittel enthalten und die erhalten worden sind durch radikalische Copolymerisation mindestens eines hydroxyfunktionellen (Meth)acrylsäureesters, mindestens einer alpha,beta-ethylenisch ungesättigten Carbonsäure und gegebenenfalls eines oder mehrerer alpha,beta-ethylenisch ungesättigter Monomerer ohne Hydroxylgruppen und ohne Carboxylgruppen in Gegenwart mindestens eines hydroxyfunktionellen Polyesteroligomeren. Die wäßrigen Überzugsmittel sind hervorragend als wäßrige Klarlacke geeignet, wie sie in der Automobilindustrie bei Mehrschichtlackierungen als Decklacke Verwendung finden. Die Überzugsmittel können auch in pigmenthaltiger Form als farbige Basislacke eingesetzt werden, die mit Klarlacken überschichtet werden.

Aus Gründen der Rationalisierung und der Materialersparnis besteht bei der Kraftfahrzeuglackierung der Wunsch nach einer Reduktion der Anzahl der Arbeitsgänge und der Lackschichten sowie einer Schichtdickenreduzierung des Lackaufbaus, ohne jedoch wesentliche Einbußen im üblichen Gesamteigenschaftsniveau zuzulassen.

Aufgabe der Erfindung ist es, ein Verfahren zur Herstellung von Mehrschichtlackierungen, insbesondere von Kraftfahrzeuglackierungen mit hervorragender oder im Vergleich zu nach dem Stand der Technik hergestellten Mehrschichtlackierungen verbesserter optischer Oberflächenqualität hinsichtlich Verlauf und Decklackstand bereitzustellen. Die nach dem Verfahren hergestellten Mehrschichtlackierungen sollen möglichst mit einer verringerten Anzahl an Arbeitsschritten hergestellt werden können, zumindest gemäß einer Verfahrensvariante eine verringerte Anzahl an Lackschichten und bevorzugt auch eine verringerte Schichtdicke des Gesamtlackaufbaus aufweisen, wobei ein vergleichbares oder verbessertes Gesamteigenschaftsniveau gegenüber Mehrschichtlackierungen des Standes der Technik erreicht werden soll. Das Verfahren soll auch einen in logistischer Hinsicht vereinfachten Betrieb einer in industriellem Maßstab betriebenen Serienlackieranlage ermöglichen, in der nebeneinander Substrate mit unifarbenen Mehrschichtlackierungen und mit Effektmehrschichtlackierungen versehen werden.

Es hat sich gezeigt, daß diese Aufgabe überraschenderweise gelöst werden kann durch das einen Gegenstand der Erfindung bildende Verfahren zur Mehrschichtlackierung eines elektrisch leitfähigen Substrats durch elektrophoretischen Auftrag einer Grundierung, Einbrennen der erhaltenen Grundierungsschicht, direktes Aufbringen einer farb- und/oder effektgebenden Überzugsschicht auf die eingebrannte Grundierungsschicht und weiteres Überlackieren der farb- und/oder effektgebenden Überzugsschicht, das dadurch gekennzeichnet ist, daß die farb- und/oder effektgebende Überzugsschicht aus einem wäßrigen, Farb- und/oder Effektpigment enthaltenden Überzugsmittel (I) erstellt wird, das als Bindemittel enthält:
A) 50 bis 85 Gew.-% eines oder mehrerer Hybridbindemittel auf der Basis von Polyestern sowie (Meth)acrylcopolymerisaten mit einer Hydroxylzahl von 100 bis 350 mg KOH/g und einer Säurezahl von 20 bis 60 mg KOH/g,
B) 0 bis 20 Gew.-% eines oder mehrerer von A) unterschiedlicher Bindemittel,
C) 15 bis 50 Gew.-% eines oder mehrerer freier oder blockierter Polyisocyanate und/oder einer oder mehrerer mit den Hydroxylgruppen der Komponente A) unter Ether- und/oder Estergruppenbildung vernetzenden Komponenten auf Triazinbasis,
wobei die Summe der Komponenten A), B) und C) sich auf 100 Gew.-% Bindemittelfestkörper ergänzt, und wobei mindestens 50 Gew.-% der (Meth)acryl-Copolymerisate der Komponente A) in Gegenwart von mindestens 20 Gew.-% des oder der Polyester der Komponente A) hergestellt worden sind.

Die auf die durch elektrophoretischen Auftrag erhaltene Grundierungsschicht direkt, ohne Aufbringen weiterer Zwischenschichten aus dem wäßrigen Überzugsmittel (I) aufgebrachte farb- und/oder effektgebende Überzugsschicht kann entweder a) mit einer effekt- und gegebenenfalls farbgebenden, den Effektfarbton der Mehrschichtlackierung bestimmenden Basislackschicht (Effektbasislackschicht) und einer Klarlackschicht versehen werden oder sie wird b) nur mit einer Klarlackschicht versehen. Wird nach der Verfahrensweise a) gearbeitet, handelt es sich bei der effektund gegebenenfalls farbgebenden Basislackschicht um die den Effektfarbton der Mehrschichtlackierung bestimmende Überzugsschicht, während beim Arbeiten nach der Verfahrensweise b) die auf die durch elektrophoretischen Auftrag erhaltene Überzugsschicht direkt, ohne Aufbringen weiterer Zwischenschichten aus dem wäßrigen Überzugsmittel (I) aufgebrachte farb- und/oder effektgebende Überzugsschicht den Farbton (Effektfarbton oder Unifarbton) der Mehrschichtlackierung bestimmt. Bei der Erstellung einer Effektmehrschichtlackierung wird im erfindungsgemäßen Verfahren bevorzugt gemäß der Arbeitsweise a) verfahren, d.h. der Effektfarbton der Mehrschichtlackierung wird durch die Effektbasislackschicht bestimmt und das wäßrige Überzugsmittel (I) ist bevorzugt unifarben pigmentiert. Wenn hingegen unifarbene Mehrschichtlackierungen erzeugt werden sollen, wird im erfindungsgemäßen Verfahren bevorzugt gemäß der Arbeitsweise b) verfahren, wobei das wäßrige Überzugsmittel (I) unifarben pigmentiert ist, nur mit einer Klarlackschicht versehen wird und somit den Unifarbton der Mehrschichtlackierung bestimmt.

Das erfindungsgemäße Verfahren eignet sich überraschend gut zur Erzeugung von Mehrschichtlackierungen mit hervorragender optischer Oberflächenqualität, wenn das wäßrige Überzugsmittel (I) direkt, ohne Aufbringen weiterer Zwischenschichten auf die elektrophoretisch aufgebrachte Grundierungsschicht aufgebracht wird.

Das erfindungsgemäße Verfahren bietet ein besonderes Rationalisierungspotential, wenn die mit Mehrschichtlackierungen zu versehenden Substrate, beispielsweise bevorzugt Automobilkarossen, innerhalb einer Lackieranlage in mehreren unterschiedlichen Farbtönen hergestellt werden sollen, insbesondere in einem sich aus einer Mehrzahl von Unifarbtönen und Effektfarbtönen zusammensetzenden Farbtonprogramm. Das erfindungsgemäße Verfahren kann einen in logistischer Hinsicht vereinfachten Betrieb einer in industriellem Maßstab betriebenen Serienlackieranlage ermöglichen. Ein logistisch besonders günstiger und bevorzugter Gegenstand der vorliegenden Erfindung besteht daher in der Anwendung des erfindungsgemäßen Verfahrens in einer Serienlackieranlage, wobei das direkt auf die elektrophoretisch aufgetragene Grundierungsschicht aufzubringende wäßrige Überzugsmittel (I) in einer das Unifarbtonprogramm bestimmenden Unifarbtonvielfalt verarbeitet wird und die so erhaltenen in mehreren verschiedenen Unifarbtönen beschichteten Substrate, bevorzugt Automobilkarossen entweder nur mit einer Klarlackdeckschicht (vorstehend erläuterte Verfahrensweise b)) oder, falls eine Effektmehrschichtlackierung erzeugt werden soll, mit einer zweischichtigen Decklackierung bestehend aus einer Effektbasislackschicht und einer Klarlackschicht (vorstehend erläuterte Verfahrensweise a)) versehen werden. Es ist also ein bevorzugter Gegenstand der vorliegenden Erfindung, das erfindungsgemäße Verfahren innerhalb einer in industriellem Maßstab betriebenen Serienlackieranlage, in der neben Substraten mit unifarbenen Mehrschichtlackierungen auch Substrate mit Effektmehrschichtlackierungen hergestellt werden sollen, nebeneinander gemäß der vorstehend erläuterten Verfahrensweisen a) und b) zu betreiben und zwar jeweils mit einem unifarbenen wäßrigen Überzugsmittel (I), bevorzugt mit mehreren wäßrigen Überzugsmitteln (I) mit jeweils unterschiedlichem Unifarbton. Die unterschiedlichen Unifarbtöne entsprechen dabei bevorzugt der für die Substrate vorgesehenen Unifarbtonvielfalt (dem Unifarbtonprogramm) und umfassen dabei bevorzugt Unifarbtöne, die gut angepaßt sind an die Effektfarbtöne der Effektbasislacke, die auf den Anteil der mit einer Effektmehrschichtlackierung zu versehenden Substrate aufgetragen werden.

Es hat sich gezeigt, daß das erfindungsgemäße Verfahren besonders günstig für Kraftfahrzeugkarossen oder deren Teile durchführbar ist. Das erfindungsgemäße Verfahren erlaubt Mehrschichtlackierungen herzustellen, die sich durch eine herausragende optische Oberflächenqualität auszeichnen.

Innerhalb des erfindungsgemäßen Verfahrens können alle an sich bekannten anodisch oder kathodisch abscheidbaren Elektrotauchlacke zur Erzeugung einer elektrophoretisch aufgebrachten Grundierung verwendet werden. Dabei handelt es sich z.B. um wäßrige Überzugsmittel mit einem Festkörper bis zu 50 Gew.-%, beispielsweise 10 bis 50 Gew.-%, insbesondere 10 bis 30 Gew.%. Der Festkörper wird gebildet aus für die Elektrotauchlackierung üblichen Bindemitteln, die ionische Gruppen oder in ionische Gruppen überführbare Gruppen sowie gegebenenfalls zur chemischen Vernetzung fähige Gruppen tragen, sowie gegebenenfalls vorhandenen Vernetzern, Pigmenten, Füllstoffen und/oder lacküblichen Additiven. Die ionischen oder in ionische Gruppen überführbaren Gruppen können anionische oder in anionische Gruppen überführbare Gruppen, z.B. saure Gruppen, wie -COOH-Gruppen oder kationische oder in kationische Gruppen überführbare, z.B. basische Gruppen, wie Aminogruppen oder Ammonium-, z.B. quartäre Ammoniumgruppen, Phosphonium- und/oder Sulfonium-Gruppen sein. Bevorzugt sind Bindemittel mit basischen bzw. kationischen Gruppen. Besonders bevorzugt sind stickstoffhaltige basische Gruppen. Diese Gruppen können quarternisiert vorliegen oder sie werden zumindest teilweise mit einem üblichen Neutralisationsmittel, einer Säure, z.B. einer organischen Monocarbonsäure, wie z.B. Ameisensäure oder Essigsäure, in ionische Gruppen überführt.

Zur Herstellung der Elektrotauchlackschicht können beispielsweise die üblichen, anionische Gruppen enthaltenden anodisch abscheidbaren Elektrotauchlack-Bindemittel und Lacke (ATL) verwendet werden. Es handelt sich beispielsweise um Bindemittel auf Basis von Polyestern, Epoxidharzen, Poly(meth)acrylaten, Maleinatölen oder Polybutadienölen mit einem Gewichtsmittel der Molmasse von beispielsweise 300 bis 10000 und einer Säurezahl von 35 bis 300 mg KOH/g. Die Bindemittel tragen z.B. -COOH, -SO₃H und/oder -PO₃H₂-Gruppen. Die Harze können nach Neutralisation von mindestens einem Teil der sauren Gruppen in die Wasserphase überführt werden. Die Bindemittel können selbstvernetzend oder fremdvernetzend sein. Die Lacke können daher auch übliche Vernetzer enthalten, z.B. Triazinharze, Vernetzer, die umesterungsfähige Gruppen enthalten oder blockierte Polyisocyanate. Spezielle Beispiele für solche im erfindungsgemäßen Verfahren einsetzbare anionische Gruppen enthaltende anodisch abscheidbare Elektrotauchlack-Bindemittel und Lacke (ATL) sind z.B. in der DE-A-28 24 418 beschrieben.

Bevorzugt werden im erfindungsgemäßen Verfahren jedoch kathodische Elektrotauchlacke (KTL) auf Basis kationischer bzw. basischer Bindemittel eingesetzt. Solche basischen Harze sind beispielsweise primäre, sekundäre oder tertiäre Aminogruppen enthaltende Harze, deren Aminzahlen z.B. bei 20 bis 250 mg KOH/g liegen. Das Gewichtsmittel der Molmasse (Mw) der Basisharze liegt bevorzugt bei 300 bis 10000. Beispiele für solche Basisharze sind Amino(meth)acrylatharze, Aminoepoxidharze, Aminoepoxidharze mit endständigen Doppelbindungen, Aminoepoxidharze mit primären OH-Gruppen, Aminopolyurethanharze, aminogruppenhaltige Polybutadienharze oder modifizierte Epoxidharz-Kohlendioxid-Amin-Umsetzungsprodukte. Diese Basisharze können selbstvernetzend sein oder sie werden mit bekannten Vernetzern im Gemisch eingesetzt. Beispiele für solche Vernetzer sind die dem Fachmann geläufigen Aminoplastharze, blockierten Polyisocyanate, Vernetzer mit endständigen Doppelbindungen, Polyepoxidverbindungen oder Vernetzer, die umesterungsfähige Gruppen enthalten.

In den erfindungsgemäß verwendbaren kathodischen Tauchlack(KTL)-Bädern einsetzbare Basisharze und Vernetzer sind die üblichen, dem Fachmann geläufigen. Sie sind beispielsweise aus umfangreicher Patentliteratur bekannt.

Solche Harze können allein oder im Gemisch eingesetzt werden. Bevorzugt werden sogenannte "non-yellowing"-KTL-Systeme eingesetzt, die eine Vergilbung oder Verfärbung der Mehrschichtlackierung beim Einbrennen vermeiden. Beispielsweise handelt es sich dabei um mittels speziell ausgewählter blockierter Polyisocyanate vernetzende KTL-Systeme, wie beispielsweise in EP-A-0 265 363 beschrieben.

Zusätzlich zu den Basisharzen und gegebenenfalls vorhandenem Vernetzer kann das Elektrotauchlack (ETL)-Überzugsmittel Pigmente, Füllstoffe und/oder lackübliche Additive enthalten. Als Pigmente und Füllstoffe kommen die üblichen anorganischen und/oder organischen Pigmente und Füllstoffe in Frage. Beispiele sind Ruß, Titandioxid, Eisenoxidpigmente, Phthalocyaninpigmente, Chinacridonpigmente, Kaolin, Talkum oder Siliziumdioxid.

Die Pigmente können zu Pigmentpasten dispergiert werden, z.B. unter Verwendung von bekannten Pastenharzen. Solche Harze sind dem Fachmann geläufig. Beispiele für erfindungsgemäß in KTL-Bädern verwendbare Pastenharze sind in der EP-A-0 183 025 und in der EP-A-0 469 497 beschrieben.

Als Additive sind die üblichen Additive möglich, wie sie insbesondere für ETL-Überzugsmittel bekannt sind. Beispiele dafür sind die dem Fachmann geläufigen, üblichen Netzmittel, Neutralisationsmittel, Verlaufsmittel, Katalysatoren, Korrosionsinhibitoren, Antischaummittel, Lösemittel, Lichtschutzmittel gegebenenfalls in Kombination mit Antioxidantien.

Aus den Elektrotauchlackbädern werden durch elektrophoretische Abscheidung in bekannter Weise Grundierungen auf das elektrisch leitfähige, z.B. metallische Substrat aufgebracht, beispielsweise in einer Trockenschichtdicke von 15 bis 30 µm. Gegebenenfalls können dann nicht festhaftende Lackreste abgespült werden. Die erhaltene Lackschicht wird dann bei erhöhter Temperatur, beispielsweise bis zu 180°C, eingebrannt und chemisch vernetzt, bevor erfmdungsgemäß ohne Aufbringen weiterer Zwischenschichten eine farb- und/oder effektgebende Überzugsschicht aus dem wäßrigen Überzugsmittel (I) aufgebracht wird. Das wäßrige Überzugsmittel (I) enthält als Bindemittel die vorstehend definierte Kombination der Komponenten A), B) und C).

Die Bindemittel A) werden als Hybridbindemittel bezeichnet, da sie auf Polyestern sowie (Meth)acrylcopolymerisaten basieren. Die Polyester können beispielsweise ein errechnetes Molekulargewicht von 200 bis 3000 aufweisen. Sie haben beispielsweise eine Hydroxylzahl von 100 bis 600 mg KOH/g und eine Säurezahl von 0 bis 50 mg KOH/g. Sie können beispielsweise als Oligoester mit einem errechneten Molekulargewicht von 200 bis 1000 oder als Polyester mit einem errechneten Molekulargewicht von 1000 bis 3000 eingesetzt werden. Die Hybridbindemittel haben eine Hydroxylzahl von 100 bis 350, bevorzugt 120 bis 200 mg KOH/g und eine Säurezahl von 20 bis 60, bevorzugt von 25 bis 40 mg KOH/g und setzen sich bevorzugt zusammen aus 30 bis 95 Gew.-% (Meth)acrylcopolymerisat und 5 bis 70 Gew.-% Oligo- und/oder Polyester, bevorzugt nur Oligoester. Sie sind erhältlich durch in Gegenwart eines oder mehrerer hydroxyfunktioneller Oligo- und/oder Polyester durchgeführte radikalische Polymerisation eines oder mehrerer Ester ungesättigter Carbonsäuren mit hydrophoben und hydrophilen Anteilen, wobei a) die hydrophoben Anteile auf monomeren Estern ungesättigter Carbonsäuren mit sekundären OH-Gruppen basieren, die im Gemisch mit OH-Gruppen-freien Comonomeren vorliegen können und b) die hydrophilen Anteile auf monomeren Estern ungesättigter Carbonsäuren mit primären OH-Gruppen basieren, die im Gemisch mit OH-Gruppen-freien Comonomeren vorliegen können. Dabei beträgt das Zahlenverhältnis von aus den Komponenten a) und b) stammenden primären zu sekundären OH-Gruppen im Copolymeren bevorzugt zwischen 1 : 1,5 bis 1 : 2,5. Es werden mindestens 50 Gew.-% der (Meth)acryl-Copolymerisate in Gegenwart von mindestens 20 Gew.-% des oder der Oligo- und/oder Polyester hergestellt.

Die beispielsweise verwendbaren Oligoester sind erhältlich durch Polykondensation von Diolen und/oder Polyolen und Polycarbonsäuren, bevorzugt Dicarbonsäuren, und/oder deren Derivaten, gegebenenfalls unter Mitverwendung von einer oder mehreren Hydroxycarbonsäuren, einem oder mehreren Monoalkoholen und/oder Monocarbonsäuren und sie besitzen ein errechnetes Molekulargewicht von 200 bis 1000, vorzugsweise von 300 bis 600, eine Hydroxylzahl von 100 bis 600, bevorzugt 200 bis 500 mg KOH/g, und eine Säurezahl von 0 bis 15, bevorzugt 0 bis 1,5 mg KOH/g.

Die beispielsweise verwendbaren Polyester sind erhältlich durch Polykondensation von Diolen und/oder Polyolen und Polycarbonsäuren, bevorzugt Dicarbonsäuren, und/oder deren Derivaten, gegebenenfalls unter Mitverwendung von einer oder mehreren Hydroxycarbonsäuren, einem oder mehreren Monoalkoholen und/oder Monocarbonsäuren und sie besitzen ein errechnetes Molekulargewicht von 1000 bis 3000, vorzugsweise unter 2000, eine Hydroxylzahl von 100 bis 400, bevorzugt 150 bis 250 mg KOH/g, und eine Säurezahl von 0 bis 50, bevorzugt 10 bis 40, besonders bevorzugt 20 bis 35 mg KOH/g.

Die bei der Herstellung der Komponente A) verwendeten Oligo- und/oder Polyester können z.B. durch Kondensation von einem oder mehreren Diolen und/oder Polyolen, gegebenenfalls in Anwesenheit von einem oder mehreren Monoalkoholen, mit einer oder mehreren Polycarbonsäuren, bevorzugt Dicarbonsäuren und/oder deren Derivaten sowie gegebenenfalls einer oder mehreren Monocarbonsäuren und Hydroxycarbonsäuren hergestellt werden. Die Polykondensation erfolgt nach üblichen, dem Fachmann geläufigen Verfahren, beispielsweise in Gegenwart von üblichen Veresterungskatalysatoren und beispielsweise bei erhöhten Temperaturen von z.B. 180 bis 230°C in der Schmelze.

Beispiele für verwendbare Polyole sind solche mit mehr als zwei OH-Gruppen, wie aliphatische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit. Ebenfalls möglich ist es, einen oder mehrere monofunktionelle Alkohole, wie z.B. Monoalkanole mit beispielsweise 1 bis 20 C-Atomen im Alkylrest miteinzusetzen. Beispiele hierfür sind Methanol, Ethanol, Isopropanol, Laurylalkohol und Stearylalkohol.

Beispiele für verwendbare Diole sind aliphatische Diole, wie z.B. Ethylenglykol, Propylenglykol (1,3 und 1,2), Butandiol, Hexandiol-(1,6), Neopentylglykol, 2-Butyl-2-ethyl-propandiol-1,3; Polyetherglykole des Ethylens und Propylens mit bis zu 6 Monomerbausteinen, wie Diethylenglykol, Triethylenglykol, Tetraethylenglykol und Hexaethylenglykol; und cycloaliphatische Diole, wie 1,3-Dimethylolcyclohexan und 1,4-Dimethylolcyclohexan.

Bevorzugtes Beispiel für eine verwendbare Hydroxycarbonsäure ist Dimethylolpropionsäure.

Beispiele für Polycarbonsäuren sowie die bevorzugten Dicarbonsäuren sind Trimellithsäure, aliphatische gesättigte und ungesättigte Dicarbonsäuren, wie z.B. Maleinsäure, Fumarsäure, Bernsteinsäure, Adipinsäure, Azelainsäure, Sebacinsäure; cycloaliphatische gesättigte und ungesättigte Dicarbonsäuren und aromatische Dicarbonsäuren, wie Phthalsäure, Isophthalsäure, Tetra- und Hexahydrophthalsäure und Cyclohexandicarbonsäure (1,2, 1,3 und 1,4), Itaconsäure sowie deren mögliche Anhydride. Ebenfalls möglich ist die Mitverwendung von monofunktionellen Carbonsäuren, wie z.B. Essigsäure, Propionsäure, Benzoesäure oder Stearinsäure.

Die Monomeren a) und b) werden in derartigen Mengen eingesetzt, daß das erhaltene Hybridbindemittel auf der Basis von Oligo- und/oder Polyestern sowie (Meth)acrylcopolymerisaten eine Hydroxylzahl von 100 bis 350, bevorzugt 120 bis 200 und eine Säurezahl von 20 bis 60, bevorzugt von 25 bis 40 mg KOH/g aufweist.

Der in der vorliegenden Beschreibung und den Patentansprüchen gebrauchte Ausdruck "(Meth)acryl" steht synonym für "Acryl und/oder Methacryl".

Die Bindemittelkomponente A) kann durch Polymerisation der Komponenten a) und b) in dem oder den Oligo- und/oder Polyestern hergestellt werden.

Bei der Bereitstellung der Bindemittelkomponente A) werden mindestens 50 Gew.-%, bevorzugt über 70 Gew.-% der Gesamtmenge des (Meth)acryl-Copolymeren und bevorzugt seine Gesamtmenge in Gegenwart von mindestens 20 Gew.-%, bevorzugt über 30 Gew.-%, besonders bevorzugt über 40 Gew.-% des oder der Oligo- und/oder Polyester hergestellt. Werden mehrere Oligo- und/oder Polyester verwendet, so können diese bei der Herstellung des (Meth)acryl-Copolymeren als Gemisch vorliegen, oder es können einzelne oder ein Teil der Oligo- und/oder Polyester eingesetzt und die restlichen zu einem späteren Zeitpunkt zugesetzt werden. Die Herstellung der (Meth)acryl-Copolymeren kann durch radikalische Polymerisation nach üblichen Verfahren erfolgen. Dabei werden mindestens 20 Gew.-%, bevorzugt über 30 Gew.-%, besonders bevorzugt über 40 Gew.-% des oder der Oligo- und/oder Polyester gegebenenfalls im Gemisch mit geeigneten organischen Lösemitteln in das Reaktionsgefäß vorgelegt, auf Reaktionstemperatur geheizt und mindestens 50 Gew.-%, bevorzugt über 70 Gew.-%, besonders bevorzugt die Gesamtmenge des gegebenenfalls Radikalinitiatoren enthaltenden Monomerengemischs für die Synthese des (Meth)acryl-Copolymerisats zudosiert. Die gegebenenfalls verbleibende Restmenge des gegebenenfalls Radikalinitiatoren enthaltenden Monomerengemischs für die Synthese des (Meth)acryl-Copolymerisats kann in gleicher Weise radikalisch polymerisiert werden, wobei nur organisches Lösemittel ohne Anteile des oder der Oligo- und/oder Polyester in das Reaktionsgefäß vorgelegt wird, auf Reaktionstemperatur geheizt wird und danach so verfahren wird wie vorstehend beschrieben. Das durch Polymerisation der gegebenenfalls verbleibenden Restmenge des Monomerengemischs erhaltene (Meth)acrylcopolymere kann dem in Gegenwart des oder der Oligo- und/oder Polyester synthetisierten (Meth)acrylcopolymeren zugemischt werden.

Beispielsweise kann man besonders bevorzugt so vorgehen, daß die Gesamtmenge der 5 bis 70 Gew.-% des oder der hydroxyfunktionellen Oligo- und/oder Polyester der Komponente A) vorgelegt wird und darin die Gesamtmenge der für die Herstellung der 95 bis 30 Gew.-% des oder der (Meth)acrylcopolymeren der Komponente A) benötigten Ester ungesättigter Carbonsäuren mit hydrophoben und hydrophilen Anteilen, basierend auf den vorstehend definierten Komponenten a) und b) darin polymerisiert werden. Dabei addieren sich die Gewichtsteile der Komponenten a), b) und Oligo- und/oder Polyester auf 100 Gewichtsteile. Die Mengenanteile der Komponenten a) und b) werden bevorzugt so gewählt, daß das Zahlenverhältnis von primären zu sekundären OH-Gruppen im erhaltenen (Meth)acrylcopolymeren (ohne Berücksichtigung der OH-Gruppen des oder der Oligo- und/oder Polyester) 1 : 1,5 bis 1: 2,5 beträgt.

Die Herstellung des (Meth)acryl-Copolymeren erfolgt, wie vorstehend beschrieben, in Anwesenheit von zumindest Teilmengen des oder der Oligo- und/oder Polyester, welche in organischem Lösemittel gelöst vorgelegt werden können. Als Lösemittel, die auch im Gemisch vorliegen können, können beispielsweise solche eingesetzt werden, wie sie auch für die Oligo- und/oder Polyesterharzsynthese benutzt werden können; der oder die Oligo- und/oder Polyester können somit als Lösung vorgelegt werden, die bei ihrer Herstellung erhalten wurde. Es können aber auch andere geeignete Lösemittel eingesetzt werden. Beispielsweise eignen sich lackübliche Lösemittel, wie sie später auch im wäßrigen Überzugsmittel (I) eingesetzt werden können. Beispiele für Lösemittel, in deren Anwesenheit die Herstellung des (Meth)acrylcopolymeren durchgeführt werden kann, sind Glykolether, wie Butylglykol, Butyldiglykol, Dipropylenglykoldimethylether, Dipropylenglykolmonomethylether, Ethylenglykoldimethylether, Polyethylenglykol-di-n-butylether, Glykoletherester, wie Ethylglykolacetat, Butylglykolacetat, Butyldiglykolacetat, Methoxypropylacetat; Ester, wie Butylacetat, Amylacetat; Ketone, wie Methylethylketon, Methylisobutylketon, Cyclohexanon; Alkohole, wie Ethanol, Propanol, Butanol, aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C), aliphatische Kohlenwasserstoffe.

Der hydrophobe Anteil a) der (Meth)acrylcopolymeren der Komponente A) wird durch Copolymerisation von Monomeren auf der Basis von Estern ungesättigter Carbonsäuren wie (Meth)acrylsäure, Itaconsäure, Maleinsäure, Fumarsäure und Crotonsäure mit mindestens einer sekundären Hydroxylgruppe im Alkoholteil in Gegenwart eines oder mehrerer Oligo- und/oder Polyester hergestellt. Die Alkoholkomponente der Estermonomeren auf der Basis ungesättigter Carbonsäuren enthält bevorzugt 3 bis 25 Kohlenstoffatome.

Beispiele für die hydrophoben Monomeren mit sekundären OH-Funktionen sind: Hydroxypropyl(meth)acrylat, Addukte aus Glycidyl(meth)acrylat und gesättigten kurzoder langkettigen Fettsäuren mit C1-C20 Alkylresten, z.B. Essigsäure, Propionsäure, Butansäure, Capronsäure, Laurinsäure, Palmitinsäure, Stearinsäure, sowie Addukte aus Cardura E (Glycidylester der Versaticsäure) mit ungesättigten COOHfunktionellen Verbindungen, wie z.B. (Meth)acrylsäure, Itaconsäure, Maleinsäure, Fumarsäure, Crotonsäure.

Der hydrophile Anteil b) der (Meth)acrylcopolymeren der Komponente A) wird durch Copolymerisation von Monomeren auf der Basis von Estern ungesättigter Carbonsäuren wie (Meth)acrylsäure, Itaconsäure, Maleinsäure, Fumarsäure und Crotonsäure mit mindestens einer primären Hydroxylgruppe im Alkoholteil in Gegenwart eines oder mehrerer Oligo- und/oder Polyester hergestellt. Die Alkoholkomponente der Estermonomeren auf der Basis ungesättigter Carbonsäuren kann beispielsweise 2 bis 18 Kohlenstoffatome aufweisen.

Beispiele für die Monomeren zum Aufbau des hydrophilen Anteils der Komponente A) sind: Hydroxyalkylester der (Meth)acrylsäure mit einer primären OH-Gruppe im C2-C3-Hydroxyalkylrest wie Hydroxyethyl(meth)acrylat, sowie Hydroxyalkylester der (Meth)acrylsäure mit einer primären OH-Gruppe im C4-C8-Hydroxyalkylrest wie z.B. Butandiolmono(meth)acrylat, Hydroxyhexyl(meth)acrylat, Hydroxyoctyl(meth)acrylat und Umsetzungsprodukte von Hydroxyethyl(meth)acrylat mit Caprolacton.

Die hydrophilen Anteile b) der (Meth)acrylcopolymeren der Komponente A) enthalten auch Carboxylgruppen, zu deren Einführung carboxylfunktionalisierte Monomere mitverwendet werden, wie z.B. (Meth)acrylsäure, Itaconsäure und Crotonsäure. Weitere verwendbare carboxylfunktionalisierte Monomere sind durch Anlagerung von gesättigten aliphatischen Alkoholen wie z.B. Ethanol, Propanol, Butanol an Maleinsäureanhydrid hergestellte Halbester.

Bei der Herstellung der (Meth)acrylcopolymeren der Komponente A) können weitere Comonomere mitverwendeterden, die frei von OH-Gruppen sind. Beispiele hierfür sind (Cyclo)alkyl(meth)acrylate (Alkyl- und/oder Cycloalkyl(meth)acrylate) wie Ethylhexyl(meth)acrylat, Octyl(meth)acrylat, Dodecyl(meth)acrylat, Lauryl(meth)acrylat, Isobornyl(meth)acrylat, 4-Tertiärbutylcyclohexyl(meth)acrylat, Methyl(meth)acrylat, Ethyl(meth)acrylat, Butyl(meth)acrylat, Isobutyl(meth)acrylat, Tertiärbutyl(meth)acrylat, Cyclohexyl(meth)acrylat. Es können auch aromatische Vinylverbindungen, wie Styrol und Styrolderivate, wie Vinyltoluol und p-Methylstyrol als Comonomere mitverwendet werden. Die Mengenanteile der weiteren Comonomeren können so gewählt werden, daß die gewünschten Spezifikationen bezüglich Molmasse, OH-Gruppenverhältnis, OH-Zahl und Säurezahl erzielt werden.

Wie erwähnt, erfolgt die Herstellung der (Meth)acrylcopolymeren der Komponente A) durch Copolymerisation der Komponenten a) und b) in Gegenwart eines oder mehrerer Oligo- und/oder Polyester. Es handelt sich um eine radikalische Copolymerisation, bei der die Mengen der Monomeren und der Oligo- und/oder Polyester so abgestimmt werden, daß die gewünschten Spezifikationen bezüglich Molmasse, OH-Gruppenverhältnis, OH-Zahl und Säurezahl erzielt werden.

Die Polymerisation wird beispielsweise bei Temperaturen zwischen 80 und 180°C, vorzugsweise bei 100 bis 150°C durchgeführt.

Die Herstellung erfolgt beispielsweise als radikalische Lösungspolymerisation in Anwesenheit eines oder mehrerer Oligo- und/oder Polyester und eines Radikalinitiators, wie sie dem Fachmann bekannt ist. Beispiele für Radikalinitiatoren sind Peroxide wie Ditert.-Butylperoxid, Dicumylperoxid, Dibenzoylperoxid, Cumolhydroperoxid, tert.-Butylhydroperoxid, tert.-Butylperbenzoat, tert.-Butyl-per-2-ethylhexanoat, Cyclohexanonperoxid, Methylisobutylketonperoxid, AzoVerbindungen, wie 2,2'-Azo-bis(2,4-dimethylvaleronitril), Azo-bis-isobutyronitril und C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt. Bei der Polymerisation können die Monomeren auch getrennt bzw. zeitlich versetzt zudosiert werden. Die Monomeren oder das eingesetzte Monomerengemisch können die Radikalinitiatoren enthalten oder die Radikalinitiatoren können zur Monomerenmischung gegebenenfalls geringfügig zeitversetzt zugesetzt oder separat zudosiert werden.

Die radikalische Polymerisation kann im Eintopfverfahren unter Erzielung einer statistischen Verteilung von hydrophoben und hydrophilen Anteilen durchgeführt werden.

Es kann z.B. so gearbeitet werden, daß alle notwendigen Monomeren sowie der oder die Initiatoren in einem Vorratsgefäß gemischt und anschließend über einen Zeitraum von beispielsweise mehreren Stunden, z.B. 5 Stunden, bei erhöhten Temperaturen, z.B. 140°C, zu dem oder den gegebenenfalls im Gemisch mit einem oder mehreren Lösemitteln vorliegenden Oligo- und/oder Polyestern unter Rühren zudosiert werden. Die hierbei entstehenden Copolymeren besitzen dann eine statistische Verteilung der primären und sekundären Hydroxy- sowie der Carboxylgruppen.

Es ist jedoch auch möglich, eine Blockpolymerisation zur Erzielung von (Meth)acrylcopolymerisaten mit hydrophoben und hydrophilen Blöcken durchzuführen. Zur Herstellung der Blockcopolymerisate kann in üblicher Arbeitsweise vorgegangen werden. Es können beispielsweise zunächst Gemische aus hydrophoben Monomeren (gegebenenfalls zusammen mit weiteren Comonomeren) polymerisiert werden, worauf dann hydrophile Monomere (gegebenenfalls mit Comonomeren) zudosiert und weiter polymerisiert werden. In der Praxis ist es beispielsweise möglich, zuerst ein Gemisch aus hydrophoben, hydroxyfunktionellen Monomeren, (Meth)acrylsäureestern sowie gegebenenfalls z.B. Vinylaromaten zuzudosieren und anschließend ein weiteres Gemisch aus hydrophilen, hydroxyfunktionellen Monomeren, (Meth)acrylsäureestern, Vinylaromaten und carboxyfunktionellen Monomeren zuzudosieren.

Die im erfindungsgemäßen Verfahren einsetzbaren wäßrigen Überzugsmittel (I) können als Komponente B) ein oder mehrere von A) verschiedene Bindemittel in einem Mengenanteil von bis zu 20 Gew.-%, bezogen auf Bindemittelfestkörper, enthalten. Beispiele sind von A) verschiedene anionisch in Form von Carboxylgruppen und/oder nicht-ionisch in Form von Polyoxyalkylengruppierungen stabilisierte (Meth)acrylcopolymerharze, Polyesterharze oder auch Polyurethanharze. Die von A) verschiedenen Bindemittel können reine Thermoplasten sein oder sie können zur Vernetzung geeignete Hydroxylgruppen tragen. Unter die Komponente B) fallen insbesondere spezielle Pigmentanreibeharze. Ein Beispiel für ein im wäßrigen Überzugsmittel (I) im Rahmen der vorliegenden Erfindung bevorzugt einsetzbares Pastenharz auf Basis eines anionisch stabilisierten Polyurethanharzes findet sich in der DE-A-40 00 889. Bevorzugt enthalten die wäßrigen Überzugsmittel (I) neben den Komponenten A) und C) sowie den gegebenenfalls vorhandenen speziellen Anreibeharzen der Komponente B) keine weiteren Bindemittel B).

Die im erfindungsgemäßen Verfahren einsetzbaren wäßrigen Überzugsmittel (I) enthalten als Vernetzerkomponente C) 15 bis 50 Gew.-%, bezogen auf den Bindemittelfestkörper, eines oder mehrerer freier oder blockierter Polyisocyanate und/oder einer oder mehrerer mit den Hydroxylgruppen der Komponente A) unter Ether- und/oder Estergruppenbildung vernetzenden Komponenten auf Triazinbasis. Die freien oder blockierten Polyisocyanate und/oder die Triazinvernetzer können in der wäßrigen Phase gelöst oder dispergiert und/oder in der Bindemittelphase gelöst oder dispergiert in den wäßrigen Überzugsmitteln (I) vorliegen. Bevorzugt enthalten die im erfindungsgemäßen Verfahren einsetzbaren wäßrigen Überzugsmittel (I) als Vernetzerkomponente C) eine Vernetzerkombination aus einem oder mehreren blockierten Polyisocyanaten und einer oder mehrerer mit den Hydroxylgruppen der Komponente A) unter Ether- und/oder Estergruppenbildung vernetzenden Komponenten auf Triazinbasis, bevorzugt in einem Feststoff-Gewichtsverhältnis von 20 - 60 Gew.-Teilen blockiertes Polyisocyanat zu 80 - 40 Gew.-Teilen Triazinvernetzer.

Als Polyisocyanate, die einzeln oder im Gemisch in den im erfindungsgemäßen Verfahren einsetzbaren wäßrigen Überzugsmitteln (I) in freier oder blockierter Form enthalten sein können, dienen beliebige organische Di- und/oder Polyisocyanate mit aliphatisch, cycloaliphatisch, araliphatisch und/oder weniger bevorzugt aromatisch gebundenen Isocyanatgruppen, die bei Raumtemperatur flüssig sind oder durch Zusatz organischer Lösemittel verflüssigt oder in gelöster Form bei 23°C im allgemeinen eine Viskosität von 0,5 bis 2000 mPa.s, vorzugsweise über 1 und unter 1000 mPa.s, besonders bevorzugt unter 200 mPa.s aufweisen. Als Diisocyanate sind solche bevorzugt, die etwa 3 bis etwa 36, insbesondere etwa 8 bis 15 Kohlenstoffatome enthalten. Beispiele für geeignete Diisocyanate sind Toluylendiisocyanat, Diphenylmethandiisocyanat und insbesondere Hexamethylendiisocyanat, Tetramethylxylylendiisocyanat, Isophorondiisocyanat, Dicyclohexylmethandiisocyanat und Cyclohexandiisocyanat.

Als Polyisocyanate können auch solche eingesetzt werden, die Heteroatome im die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bevorzugt besitzen die Polyisocyanate eine höhere Isocyanatfunktionalität als 2, wie beispielsweise durch Diund/oder Trimerisierung vorstehend genannter Diisocyanate hergestellte Polyisocyanate vom Uretdion- bzw. Isocyanurattyp. Weitere Beispiele sind durch Umsetzung der vorstehend genannten Diisocyanate mit Wasser hergestellte Biuretgruppen enthaltende Polyisocyanate oder durch Umsetzung mit Polyolen hergestellte niedermolekulare, Urethangruppen aufweisende Polyisocyanate.

Sehr gut geeignet sind beispielsweise "Lackpolyisocyanate" auf Basis von Hexamethylendiisocyanat oder von Isophorondiisocyanat und/oder Dicyclohexylmethandiisocyanat, insbesondere solche die ausschließlich auf Hexamethylendiisocyanat basieren. Unter "Lackpolyisocyanaten" auf Basis dieser Diisocyanate sind die an sich bekannten Biuret-, Urethan-, Uretdion-, und/oder Isocyanuratgruppen aufweisenden Derivate dieser Diisocyanate zu verstehen.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet. In diesen bekannten Prepolymeren entspricht das Verhältnis von Isocyanatgruppen zu gegenüber Isocyanat reaktiven Wasserstoffatomen 1,05 bis 10: 1, vorzugsweise 1,1 bis 3 : 1, wobei die Wasserstoffatome vorzugsweise aus Hydroxylgruppen stammen. Die Art und Mengenverhältnisse der bei der Herstellung der NCO-Prepolymeren eingesetzten Ausgangsmaterialien werden im übrigen vorzugsweise so gewählt, daß die NCO-Prepolymeren eine mittlere NCO-Funktionalität von 2 bis 4, vorzugsweise von 2 bis 3 und ein Zahlenmittel der Molmasse von 500 bis 10000, vorzugsweise von 800 bis 4000 aufweisen.

Ebenfalls möglich ist die Verwendung von Copolymeren des vinylisch ungesättigten Monoisocyanates Dimethyl-m-isopropenylbenzylisocyanat als Polyisocyanat, wie sie unter anderem in der DE-A-41 37 615 beschrieben sind.

Die Polyisocyanate können in freier oder blockierter Form als Vernetzer in den wäßrigen Überzugsmitteln (I) eingesetzt werden. Im Falle der blockierten Form sind sie mit den üblichen in der Lackchemie eingesetzten, flüchtigen, unter den späteren Einbrennbedingungen wieder abspaltbaren einwertigen Blockierungsmitteln blockiert. Beispiele hierfür sind CH-acide Verbindungen wie Acetylaceton oder CH-acide Ester, wie z.B. Acetessigsäurealkylester, Malonsäuredialkylester; (cyclo)aliphatische Alkohole, wie n-Butanol, Furfurol, 2-Ethylhexanol, Cyclohexanol; Phenole, wie Kresol, tert.-Butylphenol; Dialkylaminoalkohole wie Dimethylaminoethanol; Oxime wie Methylethylketoxim, Acetonoxim, Cyclohexanonoxim; Lactame wie epsilon-Caprolactam oder Pyrrolidon-2; Imide wie Phthalimid; Hydroxyalkylester, Hydroxamsäuren und deren Ester, N-Alkylamide wie Methylacetamid, Imidazole wie 2-Methylimidazol, Pyrazole wie 2,3-Dimethylpyrazol, Triazole. Es können Gemische dieser Blockierungsmittel eingesetzt werden. Bevorzugt als Blockierungsmittel für die Polyisocyanate sind CH-acide Ester und/oder Oxime, insbesondere Malonsäurediethylester, Acetessigsäureethylester, Acetonoxim und Butanonoxim.

Die Polyisocyanate können innerhalb eines Moleküls mit gleichen oder verschiedenen Blockierungsmitteln blockiert sein. Es können auch Gemische unterschiedlich blockierter Polyisocyanate verwendet werden.

Die freien oder blockierten Polyisocyanate können als solche bei der Herstellung des wäßrigen Überzugsmittels (I) zugesetzt werden, beispielsweise durch Einrühren bzw. Einemulgieren. Dabei kann das gelöste oder dispergierte Bindemittel die Funktion eines Emulgators für das zugesetzte Polyisocyanat übernehmen. Es kann günstig sein, wenn ein Emulgator zu Hilfe genommen wird oder wenn die freien oder blockierten Polyisocyanate mit einem wassermischbaren organischen Lösemittel oder Lösemittelgemisch vorverdünnt werden. Bevorzugt werden dabei insbesondere im Falle der Verwendung freier Polyisocyanate gegenüber Isocyanatgruppen inerte Lösemittel verwendet. Beispiele sind Lösemittel, die keinen aktiven Wasserstoff enthalten, wie z.B. Diethylenglykoldiethylether, Dipropylenglykoldimethylether, Butylglykolacetat, Butyldiglykolacetat, Methoxypropylacetat oder besonders bevorzugt N-Methylpyrrolidon.

Geeignet sind weiterhin hydrophile, freie oder wie vorstehend beschrieben blockierte Polyisocyanate, die durch eine ausreichende Anzahl anionischer Gruppen und/oder durch terminale oder laterale Polyetherketten in der wäßrigen Phase stabilisiert werden. Anionisch und/oder nicht-ionisch stabilisierte, hydrophile Polyisocyanate sind dem Fachmann geläufig. Sie sind beispielsweise aus umfangreicher Patentliteratur bekannt. Wasserdispergierbare Polyisocyanate werden z.B. von der Firma Bayer unter dem Namen BayhydurR LS 2025 und LS 2032 als Handelsprodukte vertrieben. Auch diese können mit den vorstehend erwähnten Lösemitteln verdünnt werden.

Werden die Polyisocyanate in freier Form eingesetzt, so handelt es sich bei den im erfindungsgemäßen Verfahren einsetzbaren wäßrigen Überzugsmitteln (I) um Zweikomponentenüberzugsmittel, d.h. das an sich fertige Überzugsmittel (I) wird getrennt vom freien Polyisocyanat gelagert. Im Falle der Verwendung freier Polyisocyanate werden diese vorzugsweise den an sich fertigen Überzugsmitteln (I) erst kurz vor der Applikation zugemischt. Dies kann beispielsweise mittels einer in der Automobilserienlackierung üblichen Zweikomponentenmischanlage erfolgen oder man bedient sich beispielsweise einer Verfahrensweise wie aus der EP-A-0 685 544 bekannt.

Bei den unter Ethergruppenbildung mit den Hydroxylgruppen der Komponente A) vernetzenden Komponenten C) auf Triazinbasis handelt es sich insbesondere um übliche Aminharze, wie beispielsweise alkylierte Kondensate, die durch Umsetzung von Aminotriazinen und Amidotriazinen mit Aldehyden hergestellt werden. Beispielsweise handelt es sich um nach bekannten technischen Verfahren in Gegenwart von Alkoholen, wie Methanol, Ethanol, Propanol, Butanol oder Hexanol mit Aldehyden, insbesondere Formaldehyd, kondensierte Triazine wie Melamin oder Benzoguanamin.

Bevorzugt handelt es sich beispielsweise um als Vernetzer übliche Melaminharze, wie z.B. Methyl-veretherte Melaminharze, wie die Handelsprodukte Cymel 325, Cymel 327, Cymel 350 und Cymel 370, Maprenal MF 927. Weitere Beispiele für verwendbare Melaminharze sind butanol- oder isobutanolveretherte Melaminharze wie z.B. die Handelsprodukte Setamin US 138 oder Maprenal MF 610; mischveretherte Melaminharze, die sowohl butanol- als auch methanolverethert sind, wie z.B. Cymel 254, sowie insbesondere Hexamethoxymethylmelamin (HMMM) wie z.B. Cymel 301 oder Cymel 303, wobei letztere zur Vernetzung einen externen Säurekatalysator wie z.B. p-Toluolsulfonsäure benötigen können. Derartige Säurekatalysatoren können gegebenenfalls mit Aminen oder Epoxidverbindungen ionisch oder nicht-ionisch blockiert sein.

Bei den unter Estergruppenbildung mit den Hydroxylgruppen der Komponenten A) vernetzenden Komponenten C) auf Triazinbasis handelt es sich um Umesterungsvernetzer, insbesondere unter Bildung von Urethangruppen (Carbaminsäureestergruppen) mit den Hydroxylgruppen der Komponenten A) reagierende Umesterungsvernetzer, wie beispielsweise bevorzugt Tris(alkoxycarbonylamino)triazin, wie es in der EP-A-0 604 922 beschrieben wird.

Die Komponenten A) und C) und gegebenenfalls B) können beispielsweise miteinander vermischt, neutralisiert und emulgiert werden. Es ist auch möglich, zunächst die Komponente A) und gegebenenfalls B) zu neutralisieren und anschließend mit der Vernetzerkomponente C) zu vermischen, worauf Wasser zugesetzt wird.

In der Praxis kann beispielsweise so vorgegangen werden, daß eine lösemittelhaltige Komponente A) plus gegebenenfalls B) gegebenenfalls weitgehend von Lösemitteln befreit wird, bevorzugt durch Destillation unter vermindertem Druck. Anschließend wird mit Basen teilweise oder vollständig neutralisiert. Es können hierzu lackübliche Basen verwendet werden, wie Ammoniak oder organische Amine wie Triethylamin, N-Methylmorpholin, Aminoalkohole wie Dimethylisopropanolamin, Dimethylethanolamin, Triethanolamin, 2-Amino-2-methylpropanol-1. Dann kann die Komponente C) ebenfalls in die Komponenten A) plus gegebenenfalls B) eindosiert werden, bevor anschließend in das Harzgemisch vollentsalztes Wasser eindosiert wird, beispielsweise unter intensivem Mischen. Die Herstellung der Dispersion kann dabei durch Erwärmen der Wasserphase unterstützt werden. Als Mischaggregate sind beispielsweise schnellaufende Rührer oder Rotor/Stator-Mischer geeignet. Es ist auch möglich, das Dispergierergebnis durch Hochdruck- oder Ultraschall-Homogenisatoren zu verbessern. Das Verfahren kann kontinuierlich oder diskontinuierlich geführt werden.

Ebenfalls möglich ist es, das Hybridbindemittel A) plus gegebenenfalls B) gegebenenfalls nach weitgehender Befreiung von Lösemitteln teilweise oder vollständig mit Basen zu neutralisieren und mit Wasser zu verdünnen, bevor die Vernetzerkomponenten C) zugesetzt werden.

Alternativ kann das die Komponenten A), gegebenenfalls B) und gegebenenfalls C) enthaltende bevorzugt zumindest weitgehend von Lösemitteln befreite Bindemittel mit Hilfe eines üblichen, nicht-ionischen Emulgators emulgiert werden. Dies geschieht z.B. durch Homogenisieren des Bindemittels gegebenenfalls zusammen mit dem oder den Vernetzern C) und eines oder mehrerer nicht-ionischer Emulgatoren, gegebenenfalls unter Erwärmen, beispielsweise auf Temperaturen von 30 bis 80°C, z.B. 60°C. Ein derartiges Gemisch kann in einer üblichen Homogenisierungseinrichtung emulgiert werden. Beispiele hierfür sind Rotor/Stator-Homogenisatoren, die mit Drehzahlen von beispielsweise 8000 bis 10000 Umdrehungen pro Minute arbeiten. Die Emulgatoren werden beispielsweise in Mengen von 3 bis 30 Gew.-%, bezogen auf Bindemittelfestkörper, eingesetzt.

Die im erfindungsgemäßen Verfahren einsetzbaren wäßrigen Überzugsmittel (I) können hydroxyfunktionelle Reaktivverdünner in einem Mengenanteil von bis zu 20 Gew.-%, bezogen auf Bindemittelfestkörper, enthalten, die an sich wasserlöslich sind oder mittels externer Emulgatoren oder durch die Emulgatorwirkung der wasserverdünnbaren Bindemittel in die wäßrige Phase überführt worden sind. Es handelt sich um Verbindungen mit einem zahlenmittleren Molekulargewicht (Mn) unterhalb von 500, bevorzugt unterhalb von 300 und einer OH-Funktionalität von mindestens 2, beispielsweise bevorzugt zwischen 2 und 4. Beispiele für geeignete hydroxyfunktionelle Reaktivverdüner sind Alkandiole mit 2 bis 8 Kohlenstoffatomen, Glyzerin, gegebenenfalls hydriertes Rizinusöl, Trimethylolpropan, Pentaerythrit, Sorbit, Mannit sowie den vorstehenden Einschränkungen bezüglich des zahlenmittleren Molekulargewichts genügende Ethoxylierungs- und/oder Propoxylierungsprodukte dieser Polyalkohole.

Weiterhin können die im erfindungsgemäßen Verfahren eingesetzten wäßrigen Überzugsmittel (I) dem Fachmann bekannte Polymermikroteilchen enthalten. Es können vernetzte oder unvernetzte Mikroteilchen eingesetzt werden. Beispiele für solche Polymermikroteilchen sind in der EP-A-0 038 127 und EP-A-0 234 362 beschrieben.

Weiterhin können die wäßrigen Überzugsmittel (I) lacktechnische Additive enthalten, beispielsweise rheologiebeeinflussende Mittel, wie hochdisperse Kieselsäure, anorganische Schichtsilikate oder polymere Harnstoffverbindungen. Als Verdicker wirken auch beispielsweise wasserlösliche Celluloseether wie Hydroxyethylcellulose, Methylcellulose oder Carboxymethylcellulose, sowie synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Polyurethane oder Polyacrylate. Es können auch Antiabsetzmittel, Verlaufsmittel, Lichtschutzmittel (beispielsweise vom HALS-Typ, vom Benztriazol-Typ, Mikrotitandioxid), Antischaummittel, wie beispielsweise silikonhaltige Verbindungen, Netzmittel sowie haftvermittelnde Substanzen eingesetzt werden. Unter Netzmittel werden auch bekannte Pastenharze verstanden, wie sie z.B. in der DE-A-40 00 889 beschrieben sind, die zum besseren Dispergieren und Vermahlen der Pigmente eingesetzt werden können. Wasserunlösliche Additive können beispielsweise vor der Überführung in die wäßrige Phase dem Bindemittel zugemischt werden.

Die wäßrigen Überzugsmittel (I) können wassermischbare lackübliche Lösemittel, in Mengen von beispielsweise bevorzugt unter 20 Gew.-%, z.B. 5 bis 15 Gew.-% enthalten. Auch wasserunmischbare Lösemittel können enthalten sein. Die Lösemittel können aus den Bindemittelkomponenten A) und gegebenenfalls B) oder aus der Vernetzerkomponente C) stammen oder sie werden separat zugegeben. Beispiele für Lösemittel sind Glykole, z.B. Ethylenglykol, Propylenglykol und deren Oligomere, Glykolether, wie Ethoxypropanol, Butylglykol, Butyldiglykol, Dipropylenglykoldimethylether, Dipropylenglykolmonomethylether, Ethylenglykoldimethylether, Polyethylenglykol-di-n-butylether, Glykoletherester wie Ethylglykolacetat, Butylglykolacetat, Butyldiglykolacetat, Methoxypropylacetat; Ester, wie Butylacetat, Amylacetat; Ketone wie Aceton, Methylethylketon, Methylisobutylketon, Cyclohexanon; Alkohole wie Ethanol, Propanol, Butanol; N-Methylpyrrolidon; aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C), aliphatische Kohlenwasserstoffe.

Die wäßrigen Überzugsmittel (I) enthalten farb- und/oder effektgebende Effektpigmente und/oder farbgebende Absorptionspigmente und gegebenenfalls Füllstoffe, bevorzugt enthalten sie jedoch keine Effektpigmente. Bei Anwendung des erfindungsgemäßen Verfahrens im industriellen Serienlackiermaßstab wird das wäßrige Überzugsmittel (I) bevorzugt in einer das Unifarbtonprogramm bestimmenden Unifarbtonvielfalt bereitgestellt. Sollen nach dem erfindungsgemäßen Verfahren Effektmehrschichtlackierungen hergestellt werden und geschieht dies nach der dann bevorzugten, vorstehend erläuterten Verfahrensweise a), so ist es besonders bevorzugt, wenn die unifarbenen Pigmentierungen des wäßrigen Überzugsmittels (I) auf den Farbton des anschließend applizierten Effektbasislacks abgestimmt sind, d.h. bevorzugt kommen die Farbtöne des wäßrigen Überzugsmittels (I) und des Effektbasislacks einander nahe.

Beispiele für im wäßrigen Überzugsmittel (I) verwendbare Effektpigmente sind die plättchenförmigen üblicherweise in Effektlacken verwendeten Pigmente, wie Metallpigmente, z.B. aus Titan, Aluminium oder Kupfer, Interferenzpigmente, wie z.B. metalloxidbeschichtete Metallpigmente, z.B. titandioxidbeschichtetes oder mischoxidbeschichtetes Aluminium, beschichteter Glimmer, z.B. titandioxidbeschichteter oder mischoxidbeschichteter Glimmer, Mikrotitandioxid und Graphiteffektpigmente, plättchenförmiges Eisenoxid (micaceous iron oxide), Molybdändisulfidpigmente, plättchenförmige Kupferphthalocyaninpigmente und Bismutoxichloridplättchen, beschichtete Glasflakes, sowie Effektpigmente, die einen starken Farbflop insbesondere auf dunklen Untergründen entwickeln.

Die Effektpigmente, die als Pulver oder in Form einer handelsüblichen Paste vorliegen können, werden im allgemeinen zunächst mit bevorzugt wasserverdünnbaren organischen Lösemitteln und Additiven versetzt und zu einer Paste verarbeitet. Es kann zweckmäßig sein bei der Herstellung der Paste die vorstehend beschriebenen wasserverdünnbaren Bindemittel und/oder Pastenharze zuzusetzen. Es ist darauf zu achten, daß die plättchenförmigen Effektpigmente beim Vermischen nicht mechanisch beschädigt werden.

Beispiele für in den wäßrigen Überzugsmitteln (I) verwendbare farbgebende Absorptionspigmente und/oder Füllstoffe, die organischer oder anorganischer Natur sein können, sind Titandioxid, Eisenoxidpigmente, Ruß, Siliziumdioxid, Bariumsulfat, Talkum, Azopigmente, Phthalocyaninpigmente, Chinacridonpigmente, Diketo-Pyrrolopyrrol-Pigmente, Perylenpigmente, Indanthronpigmente.

Die farbgebenden Absorptionspigmente und/oder Füllstoffe werden im allgemeinen in einem Teil der nicht-wäßrigen oder schon in die wäßrige Phase überführten Bindemittelkomponente A) angerieben. Bevorzugt kann das Anreiben auch in einem der Komponente B) zuzurechnenden speziellen wasserverdünnbaren Pastenharz geschehen. Ein Beispiel für ein im wäßrigen Überzugsmittel (I) bevorzugt einsetzbares Pastenharz auf Basis eines anionisch stabilisierten Polyurethanharzes findet sich in der DE-A-40 00 889. Das Anreiben geschieht in üblichen dem Fachmann bekannten Aggregaten. Danach wird mit dem restlichen Anteil des wäßrigen Bindemittels oder des wäßrigen Pastenharzes zur fertigen Farbpigmentanreibung komplettiert.

Die im erfindungsgemäßen Verfahren eingesetzten wäßrigen Überzugsmittel (I) besitzen bevorzugt einen Festkörpergehalt von 15 bis 55 Gew.-%, besonders bevorzugt von 20 bis 50 Gew.-%. Das Verhältnis von Pigment- zu Festharzanteil (Bindemittelfestkörper aus den Komponenten A), B) und C)) in den wäßrigen Überzugsmitteln (I) beträgt beispielsweise 0,03 : 1 bis 2,5 : 1, bevorzugt 0,06 : 1 bis 2 : 1, jeweils bezogen auf das Festkörpergewicht.

Die wäßrigen Überzugsmittel (I) können nach üblichen Methoden direkt auf die eingebrannte elektrophoretisch aufgebrachte Grundierung appliziert werden. Bevorzugt werden sie durch Spritzen in einer Trockenschichtdicke von beispielsweise 15 bis 50 µm appliziert, beispielsweise durch Druckluftspritzen, Airless-Spritzen, Hochrotation, bevorzugt durch elektrostatischen Sprühauftrag (ESTA), insbesondere durch elektrostatisch unterstützten Hochrotationsauftrag.

Nach dem Auftrag kann die aus dem Überzugsmittel (I) gebildete Lackschicht eingebrannt werden, bevor sie mit einem Klarlack überlackiert wird (vorstehend erläuterte Verfahrensweise b)). Insbesondere falls es sich bei der Vernetzerkomponente C) im wäßrigen Überzugsmittel (I) um freies Polyisocyanat handelt, kann der Klarlack auch bevorzugt im bekannten Naß-in-Naß-Verfahren aufgebracht werden, d.h. nachdem die aus dem wäßrigen Überzugsmittel (I) gebildete Lackschicht kurz bei Temperaturen bis zu 80°C abgelüftet worden ist. Bei der Verfahrensweise b) des erfindungsgemäßen Verfahrens wird die aus dem wäßrigen Überzugsmittel (I) gebildete Lackschicht mit einem üblichen flüssigen oder Pulverklarlack in einer Trockenschichtdicke von beispielsweise 30 bis 80, bevorzugt von 30 bis 60 µm überlackiert und die Klarlackschicht wird bei Temperaturen von beispielsweise 60 bis 160°C eingebrannt. Dabei richten sich die Schichtdicke und Trocknungsbedingungen der Klarlackschicht nach dem verwendeten Klarlacksystem.

Soll das erfindungsgemäße Verfahren nach der vorstehend erläuterten Verfahrensweise a) durchgeführt werden, indem eine aus einer Effektbasis- und einer Klarlackschicht bestehende Zweischichtlackierung auf die aus dem wäßrigen Überzugsmittel (I) gebildete Überzugsschicht aufgebracht wird, so kann diese nach ihrem Auftrag eingebrannt werden, was in der Regel bei Einkomponentensystemen erfolgt, beispielsweise bei Temperaturen bis zu 165°C, bevor sie mit der den Effektfarbton der Mehrschichtlackierung bestimmenden Überzugsschicht aus einem Effektbasislack überlackiert wird. Insbesondere falls es sich bei der Vernetzerkomponente C) im Überzugsmittel (I) um freies Polyisocyanat handelt, was einem Zweikomponentensystem entspricht, kann die nachfolgende Effektbasislackschicht auch im bekannten Naß-in-Naß-Verfahren aufgebracht werden, d.h. nachdem die aus dem wäßrigen Überzugsmittel (I) gebildete Lackschicht kurz abgelüftet worden ist, z.B. bei Temperaturen bis zu 80°C.

Als Effektbasislacküberzugsmittel werden dabei solche verwendet, wie sie üblicherweise zur Herstellung von Effektbasislack/Klarlack-Zweischichtlackierungen eingesetzt werden und in großer Zahl beispielsweise aus der Patentliteratur bekannt sind.

Die Effektbasislacke können physikalisch trocknend oder unter Ausbildung kovalenter Bindungen vernetzbar sein. Bei den unter Ausbildung kovalenter Bindungen vernetzenden Effektbasislacken kann es sich um selbst- oder fremdvernetzende Systeme handeln.

Die im erfindungsgemäßen Verfahren verwendbaren farb- und/oder effektgebenden Basislacke sind flüssige Überzugsmittel. Es kann sich um ein- oder mehrkomponentige Überzugsmittel handeln, einkomponentige sind bevorzugt. Es kann sich um Systeme auf Basis organischer Lösemittel handeln oder es handelt sich bevorzugt um Wasserbasislacke, deren Bindemittelsysteme in geeigneter Weise, z.B. anionisch, kationisch oder nicht-ionisch, stabilisiert sind.

Bei den im erfindungsgemäßen Verfahren verwendbaren Effektbasislacküberzugsmitteln handelt es sich um übliche Lacksysteme, die ein oder mehrere übliche Basisharze als filmbildende Bindemittel enthalten. Sie können, falls die Basisharze nicht selbstvernetzend oder selbsttrocknend sind, gegebenenfalls auch Vernetzer enthalten. Sowohl die Basisharzkomponente als auch die Vernetzerkomponente unterliegen keinerlei Beschränkung. Die Bindemittel/Vernetzer-Systeme der Effektbasislacke können hinsichtlich der qualitativen Zusammensetzung gleich oder ähnlich sein, bevorzugt sind sie unterschiedlich von denen der wäßrigen Überzugsmittel (I) sein. Als filmbildende Bindemittel (Basisharze) können beispielsweise Polyester-, Polyurethan- und/oder (Meth)acrylcopolymerharze verwendet werden.

Im Fall der bevorzugten Effektwasserbasislacke sind bevorzugt Polyurethanharze enthalten, besonders bevorzugt mindestens zu einem Anteil von 15 Gew.-% bezogen auf den Festharzgehalt des Effektwasserbasislacks. Die Auswahl der gegebenenfalls enthaltenen Vernetzer ist unkritisch, sie richtet sich nach der Funktionalität der Basisharze, d.h. die Vernetzer werden in üblicher Weise ausgewählt, so daß sie eine zur Funktionalität der Basisharze komplementäre, reaktive Funktionalität aufweisen. Beispiele für solche komplementäre Funktionalitäten zwischen Basisharz und Vernetzer sind: Hydroxyl/Methylolether, Hydroxyl/Freies Isocyanat, Hydroxyl/Blockiertes Isocyanat, Carboxyl/Epoxid. Sofern miteinander verträglich, können auch mehrere solcher komplementärer Funktionalitäten in einem Effektbasislack nebeneinander vorliegen. Die gegebenenfalls in den Effektbasislacken verwendeten Vernetzer können einzeln oder im Gemisch vorliegen.

Die beim erfindungsgemäßen Verfahren eingesetzten Effektbasislacke enthalten neben den üblichen physikalisch trocknenden und/oder chemisch vernetzenden Bindemitteln Effektpigmente, z.B. Metallpigmente, z.B. aus Aluminium, beschichteter Glimmer, Graphiteffektpigmente, plättchenförmiges Eisenoxid, plättchenförmige Kupferphthalocyaninpigmente.

Bevorzugt enthalten die Effektbasislacke auch anorganische und/oder organische Buntpigmente, z.B. Titandioxid, Eisenoxidpigmente, Ruß, Azopigmente, Phthalocyaninpigmente, Chinacridonpigmente.

Es ist bevorzugt, wenn das wäßrige Überzugsmittel (I) und der Effektbasislack bezüglich ihrer Farbtöne aufeinander abgestimmt sind, d.h. insbesondere einander nahekommende Farbtöne aufweisen.

Weiterhin können die Effektbasislacke lackübliche Additive enthalten, wie z.B. Füllstoffe, Katalysatoren, Verlaufsmittel, Antikratermittel oder insbesondere Lichtschutzmittel, gegebenenfalls in Verbindung mit Antioxidantien.

Es können die üblichen, dem Fachmann geläufigen Effektbasislacksysteme auf Lösemittelbasis im erfindungsgemäßen Verfahren eingesetzt werden. Sie sind beispielsweise aus umfangreicher Patentliteratur bekannt.

Die Effektbasislacke können nach üblichen Methoden appliziert werden. Bevorzugt werden sie in einer von der Deckfähigkeit abhängigen Trockenschichtdicke von beispielsweise 10 bis 40 µm appliziert, beispielsweise durch Spritzen, wie Druckluftspritzen, Airless-Spritzen, Hochrotation, bevorzugt durch elektrostatischen Sprühauftrag (ESTA), insbesondere durch elektrostatischen Hochrotationsauftrag. Der Auftrag des Effektbasislacks kann in einem oder zwei Spritzgängen geschehen, im letzteren Fall erfolgt der erste Spritzgang bevorzugt mittels elektrostatischen Sprühauftrag, während der zweite Spritzgang bevorzugt durch pneumatisches Spritzen erfolgt.

Nach dem Auftrag kann die Effektbasislackschicht, bevorzugt Effektwasserbasislackschicht getrocknet oder eingebrannt werden, bevor sie mit einem Klarlack überlackiert wird. Bevorzugt wird der Klarlack im bekannten Naß-in-Naß-Verfahren aufgebracht, d.h. nachdem die Effektbasislackschicht kurz abgelüftet worden ist, z.B. bei Temperaturen von 20 bis zu 80°C. Die Effektbasislackschicht wird mit einem üblichen flüssigen Klarlack oder Pulverklarlack (in diesem Fall kann es sich beispielsweise um eine Trocken-in-Naß-Applikation handeln) in einer Trockenschichtdicke von beispielsweise 30 bis 80, bevorzugt von 30 bis 60 µm, je nach verwendetem Klarlacksystem, überlackiert. Die Klarlackschicht kann beim Naßin-Naß- oder Trocken-in-Naß-Auftrag dann gemeinsam mit der Effektbasislackschicht bei Temperaturen von beispielsweise bis zu 160°C eingebrannt werden. Dabei richten sich die Trocknungsbedingungen der Decklackschicht (Effektbasislack und Klarlack) nach dem verwendeten Klarlacksystem.

Als Klarlack zur Erzeugung der dritten (Verfahrensweise b) des erfindungsgemäßen Verfahrens) oder zur Erzeugung der vierten Überzugsschicht (Verfahrensweise a) des erfindungsgemäßen Verfahrens) sind grundsätzlich alle bekannten oder transparent pigmentierten Überzugsmittel geeignet. Dabei kann es sich um ein- oder mehrkomponentige Klarlacküberzugsmittel handeln. Sie können lösemittelfrei (flüssig oder als Pulverklarlack) sein, oder es kann sich um Systeme auf der Basis von Lösemitteln handeln oder es handelt sich um wasserverdünnbare Klarlacke, deren Bindemittelsysteme in geeigneter Weise, z.B. anionisch, kationisch oder nicht-ionisch, stabilisiert sind. Bei den wasserverdünnbaren Klarlacksystemen kann es sich um wasserlösliche oder in Wasser dispergierte Systeme, beispielsweise Emulsionssysteme oder Pulverslurry-Systeme, wie dem Fachmann geläufig, handeln. Die Klarlacküberzugsmittel härten beim Einbrennen bei Temperaturen von beispielsweise bis zu 160°C durch chemische Vernetzung aus.

Bei den im erfindungsgemäßen Verfahren verwendbaren Klarlacken handelt es sich um übliche Klarlacküberzugsmittel, die ein oder mehrere übliche Basisharze als filmbildende Bindemittel enthalten. Sie können, falls die Basisharze nicht selbstvernetzend sind, gegebenenfalls auch Vernetzer enthalten. Sowohl die Basisharzkomponente als auch die Vernetzerkomponente unterliegen keinerlei Beschränkungen. Als filmbildende Bindemittel (Basisharze) können beispielsweise Polyester-, Polyurethan- und/oder Poly(meth)acrylatharze verwendet werden. Die Auswahl der gegebenenfalls enthaltenen Vernetzer ist unkritisch, sie richtet sich nach der Funktionalität der Basisharze, d.h. die Vernetzer werden so ausgewählt, daß sie eine zur Funktionalität der Basisharze komplementäre, reaktive Funktionalität aufweisen. Beispiele für solche komplementäre Funktionalitäten zwischen Basisharz und Vernetzer sind: Carboxyl/Epoxid, Hydroxyl/Methylolether, Hydroxyl/freies Isocyanat, Hydroxyl/blockiertes Isocyanat, (Meth)acryloyl/CH-acide Gruppe. Sofern miteinander verträglich können auch mehrere solcher komplementären Funktionalitäten in einem Überzugsmittel nebeneinander vorliegen. Die gegebenenfalls in den Überzugsmitteln enthaltenen Vernetzer können einzeln oder im Gemisch vorliegen.

Neben den chemisch vernetzenden Bindemitteln sowie gegebenenfalls Vernetzern können die im erfmdungsgemäßen Verfahren einsetzbaren Klarlacke übliche Additive, wie z.B. Katalysatoren, Verlaufsmittel, Farbstoffe, insbesondere jedoch Rheologiesteuerer, wie Mikrogele, NAD (=non-aqueous-dispersions), disubstituierte Harnstoffe ("sagging control agents") sowie Lichtschutzmittel gegebenenfalls in Kombination mit Antioxidantien enthalten.

Es können die üblichen, dem Fachmann geläufigen ein- (1K) und zweikomponentigen (2K) nicht-wäßrigen Klarlacksysteme im erfindungsgemäßen Verfahren als Klarlack eingesetzt werden. Sie sind beispielsweise aus umfangreicher Patentliteratur bekannt.

Es können auch die üblichen, dem Fachmann geläufigen, ein- (1K) oder zweikomponentigen (2K) Wasserklarlacksysteme im erfindungsgemäßen Verfahren als Klarlack eingesetzt werden. Sie sind beispielsweise aus umfangreicher Patentliteratur bekannt.

Es können auch die üblichen, dem Fachmann geläufigen, Pulverklarlacksysteme im erfindungsgemäßen Verfahren als Klarlack eingesetzt werden. Sie sind beispielsweise aus umfangreicher Patentliteratur bekannt.

Der transparente Überzug kann in einer einzigen Schicht oder in Form von mehreren Schichten aus dem gleichen oder aus mehreren verschiedenen transparenten Überzugsmitteln aufgebracht werden. Zweckmäßig wird die transparente Überzugsschicht jedoch aus nur einem Klarlacküberzugsmittel aufgebracht.

Als Substrat für das erfindungsgemäße Verfahren dienen elektrisch leitfähige, z.B. metallische Substrate. Insbesondere geeignet sind z.B. Automobilkarossen oder Teile davon, sie können aus vorbehandeltem oder unvorbehandeltem Metall oder aus mit einer elektrisch leitfähigen Schicht versehenem Metall bestehen. Auf diese Substrate wird die erste Überzugsschicht, insbesondere in Form einer Korrosionsschutzgrundierung, elektrophoretisch in üblicher Weise und in einer für ETL-Grundierungen üblichen Trockenschichtdicke von beispielsweise 15 bis 30 µm abgeschieden und eingebrannt.

Bei der Verfahrensweise a) des erfindungsgemäßen Verfahrens wird die zweite Überzugsschicht der zu erstellenden Effektmehrschichtlackierung aus dem wäßrigen, bevorzugt unifarben pigmentierten Überzugsmittel (I) auf das mit der eingebrannten ETL-Schicht versehene Substrat bevorzugt in einem Spritzgang in einer Trockenschichtdicke von 25 bis 50, bevorzugt von 30 bis 40 µm aufgetragen.

Beispiele für geeignete Spritzauftragsverfahren sind Druckluftspritzen, Airless-Spritzen oder bevorzugt elektrostatisches Spritzen (ESTA), wobei elektrostatisches Hochrotationsspritzen das besonders bevorzugte Auftragsverfahren darstellt. Nach einer kurzen Ablüftzeit, bevorzugt bei erhöhten Temperaturen bis 80°C, wird die aus dem wäßrigen Überzugsmittel (I) gebildete Überzugsschicht in der Regel eingebrannt bei Temperaturen bis 165°C, bevorzugt bis 140°C oder im Falle eines wäßrigen Überzugsmittels (I), das freies Polyisocyanat als Vernetzerkomponente C) enthält, bevorzugt nur abgelüftet. Dann wird eine Effektbasislackschicht bevorzugt in einer Trockenschichtdicke von beispielsweise 10 bis 40 µm aufgetragen. Nach kurzem Ablüften des Effektbasislacks, bevorzugt bei erhöhten Temperaturen bis 80°C erfolgt der Auftrag des Klarlacks im bevorzugten Naß-in-Naß-Verfahren in einer für Klarlackschichten üblichen Trockenschichtdicke von beispielsweise 30 bis 80 µm, bevorzugt 30 bis 60 µm. Effektbasislackschicht und Klarlackschicht werden bevorzugt gemeinsam eingebrannt. Beispielsweise liegt die Einbrenntemperatur beim gemeinsamen Einbrennen von Effektbasislackschicht und Klarlackschicht zwischen 80 und 160°C, bevorzugt unter 140°C. Gegebenenfalls können weitere Klarlackschichten aus dem gleichen oder davon verschiedenen Klarlacküberzugsmitteln vor oder nach dem Einbrennen aufgebracht werden.

Bei der Verfahrensweise b) des erfindungsgemäßen Verfahrens wird die zweite Überzugsschicht der zu erstellenden Mehrschichtlackierung aus dem wäßrigen, bevorzugt unifarben pigmentierten Überzugsmittel (I) auf das mit der eingebrannten ETL-Schicht versehene Substrat bevorzugt in einem Spritzgang in einer Trockenschichtdicke von 15 bis 50, beispielsweise 25 bis 50, bevorzugt von 20 bis 40 µm, beispielsweise 30 bis 40 µm, aufgetragen. Beispiele für geeignete Spritzauftragsverfahren sind Druckluftspritzen, Airless-Spritzen oder bevorzugt elektrostatisches Spritzen (ESTA), wobei elektrostatisches Hochrotationsspritzen das besonders bevorzugte Auftragsverfahren darstellt. Nach einer kurzen Ablüftzeit, z.B. bei Temperaturen von 20 bis 80°C, wird die aus dem wäßrigen Überzugsmittel (I) gebildete Überzugsschicht in der Regel eingebrannt, z.B. bei Temperaturen von 80 bis 165°C, bevorzugt bis 140°C oder im Falle eines wäßrigen Überzugsmittels (I), das freies Polyisocyanat als Vernetzerkomponente C) enthält, bevorzugt nur abgelüftet. Danach erfolgt der Auftrag des Klarlacks in einer für Klarlackschichten üblichen Trockenschichtdicke von beispielsweise 30 bis 80 µm, bevorzugt 30 bis 60 µm. Beispielsweise liegt die Einbrenntemperatur für die Klarlackschicht zwischen 80 und 160°C, bevorzugt unter 140°C. Gegebenenfalls können weitere Klarlackschichten aus dem gleichen oder davon verschiedenen Klarlacküberzugsmitteln vor oder nach dem Einbrennen aufgebracht werden.

Das erfindungsgemäße Verfahren kann mit Erfolg für die Fahrzeugerstlackierung eingesetzt werden. Ebenfalls möglich ist die Anwendung des Verfahrens im Bereich der Autoreparaturlackierung.

Die mit dem erfindungsgemäßen Verfahren hergestellten Mehrschichtlackierungen entsprechen den heute üblichen Anforderungen in der Kraftfahrzeuglackierung. Die Gesamtschichtdicke der nach dem erfindungsgemäßen Verfahren hergestellten Mehrschichtlackierungen kann bei vergleichbarem Gesamteigenschaftsniveau im Vergleich zu nach dem Stand der Technik erhaltenen Mehrschichtlackierungen verringert sein. Durch Einsparung von Lackschichten gelingt es, den Materialverbrauch zu senken. Die Anzahl der Arbeitsgänge kann reduziert werden.

Insbesondere erlaubt das erfindungsgemäße Verfahren die Herstellung von unifarbenen und Effektmehrschichtlackierungen mit hervorragender oder im Vergleich zu nach dem Stand der Technik erhaltenen Mehrschichtlackierungen verbesserter optischer Oberflächenqualität. Verlauf und Decklackstand sind hervorragend, wie durch Bestimmung der lang- und kurzwelligen Anteile der Oberflächenstruktur der äußeren Klarlackoberflächen gezeigt werden kann.

Die Anwendung des erfindungsgemäßen Verfahrens in einer in industriellem Maßstab betriebenen Serienlackieranlage kann zur Nutzung eines großen logistischen Vorteils führen, wenn es unter den vorstehend erläuterten Bedingungen betrieben wird.

### Beispiel 1 (Herstellung eines Oligoesters)

336,7 g Trimethylolpropan, 366,8 g Adipinsäure und 197 g Hexandiol werden unter Katalyse von hypophosphoriger Säure bei 180 bis 230°C in der Schmelze auf eine Säurezahl von 20 verestert, anschließend wird unter Vakuum bis zu einer Säurezahl unter 1,5 mg KOH/g kondensiert. Die Hydroxylzahl des erhaltenen Oligoesters betrug 460 mg KOH/g.

### Beispiel 2 (Herstellung eines Oligoesters)

534,2 g Hexandiol und 464,8 g Hexahydrophthalsäureanhydrid werden unter Katalyse von hypophosphoriger Säure bei 180 bis 230°C in der Schmelze auf eine Säurezahl von 4,5 mg KOH/g verestert. Die Hydroxylzahl des erhaltenen Oligoesters betrug 185 mg KOH/g.

### Beispiel 3 (Herstellung eines wäßrigen Hybridbindemittels)

200 g Butyldiglykol, 39 g des Oligoesters aus Beispiel 2 und 208 g des Oligoesters aus Beispiel 1 werden vorgelegt und auf 144°C unter Rühren erhitzt. Anschließend wird ein Gemisch aus 378 g eines Adduktes von Acrylsäure an den Glycidylester der Versaticsäure (hergestellt durch Umsetzung von 271 g Glycidylester der Versaticsäure mit 107 g Acrylsäure bis zum vollständigen Verbrauch der Epoxidgruppen), 31 g Isobutylacrylat, 38 g Laurylacrylat, 100 g Hydroxyethylacrylat, 196 g Styrol, 5 g Ditertiärbutylperoxid und 14 g Tertiärbutylperoktoat in einem Zeitraum von 5 Stunden zudosiert. Dann wird bei 144°C noch 2 Stunden nachpolymerisiert. Die so erhaltene Polymerlösung wird mit Dimethylethanolamin und deionisiertem Wasser bei 60°C unter Rühren auf einen Neutralisationsgrad von 50 % und einen Festkörpergehalt von 53 Gew.-% eingestellt.

### Herstellung unifarbener Mehrschichtlackierungen :

### Beispiel 4 (erfindungsgemäß)

Unter einem Dissolver werden 25,3 Teile des wäßrigen Hybridbindemittels aus Beispiel 3, 3,8 Teile Hexamethoxymethylmelamin und 12,3 Teile einer 75 gew.-%igen Lösung eines mit Butanonoxim verkappten Isocyanurat-Polyisocyanats auf Basis Hexamethylendiisocyanat in Dipropylenglykolmethylether mit einem latenten NCO-Gehalt der Lösung von 11 %, 3 Teile Butyldiglykol und 5,5 Teile deionisiertes Wasser vermischt. Es werden 30,7 Teile einer wäßrigen weißen Pigmentpaste auf Basis des wäßrigen Polyurethanharzes gemäß Beispiel aus DE-A-40 00 889 (Pigment/Bindemittel-Gewichtsverhältnis 5,5 : 1, Festkörpergehalt 65,8 Gew.-%) und 3,5 Teile einer Talkum enthaltenden wäßrigen Füllstoffpaste auf Basis des wäßrigen Polyurethanharzes gemäß Beispiel aus DE-A-40 00 889 (Füllstoff/Bindemittel-Gewichtsverhältnis 1,8 : 1, Festkörpergehalt 47,1 Gew.-%) sowie 1,5 Teile eines lacküblichen Verlaufsmittels zugemischt. Anschließend wird mit 0,4 Teilen Dimethylethanolamin und 14 Teilen deionisiertem Wasser verdünnt. Man erhält ein weißes wäßriges Überzugsmittel.

Mit in der Automobilserienlackierung verwendetem handelsüblichem kathodisch abscheidbaren Elektrotauchlack (KTL, 18 µm Trockenschichtdicke) vorbeschichtete Karosseriebleche werden hängend in 30 µm Trockenschichtdicke mit dem weißen wäßrigen Überzugsmittel elektrostatisch lackiert. Nach 5 Minuten Ablüften bei 80°C wird 15 Minuten bei 165°C eingebrannt. Danach wird mit einem handelsüblichen Zweikomponenten-PU-Klarlack durch Druckluftspritzen in einer Trockenschichtdicke von 40 µm überlackiert und 20 Minuten bei 140°C (Objekttemperatur) eingebrannt.

Die erhaltene Mehrschichtlackierung entspricht in vollem Umfang den an eine Automobilerstlackierung gestellten Anforderungen.

### Beispiel 5 (erfindungsgemäß)

Unter dem Dissolver werden 29,9 Teile des wäßrigen Hybridbindemittels aus Beispiel 3, 4,5 Teile Butyldiglykol und 6,5 Teile deionisiertes Wasser vermischt. Es werden 36,2 Teile einer wäßrigen weißen Pigmentpaste auf Basis des wäßrigen Polyurethanharzes gemäß Beispiel aus DE-A-40 00 889 (Pigment/Bindemittel-Gewichtsverhältnis 5,5 : 1, Festkörpergehalt 65,8 Gew.-%) und 4,1 Teile einer Talkum enthaltenden wäßrigen Füllstoffpaste auf Basis des wäßrigen Polyurethanharzes gemäß Beispiel aus DE-A-40 00 889 (Füllstoff/Bindemittel-Gewichtsverhältnis 1,8 : 1, Festkörpergehalt 47,1 Gew.-%) sowie 1,8 Teile eines lacküblichen Verlaufsmittels zugemischt. Anschließend wird mit 0,5 Teilen Dimethylethanolamin und 16,5 Teilen deionisiertem Wasser verdünnt. Man erhält einen weißen Stammlack.

Mit in der Automobilserienlackierung verwendetem handelsüblichem kathodisch abscheidbarem Elektrotauchlack (KTL, 18 µm Trockenschichtdicke) vorbeschichtete Karosseriebleche werden hängend in 30 µm Trockenschichtdicke mit einem weißen wäßrigen Überzugsmittel, unmittelbar vor der Applikation hergestellt durch Vermischen von 100 Teilen des vorstehend erhaltenen weißen Stammlacks und 14,6 Teilen eines handelsüblichen wasserverdünnbaren Polyisocyanats (Bayhydur 2032 der Firma Bayer, NCO-Gehalt: 17,2 Gew.-%), elektrostatisch lackiert. Nach 5 Minuten Ablüften bei 80 C wird mit einem handelsüblichen Zweikomponenten-PU-Klarlack in einer Trockenschichtdicke von 40 µm überlackiert und 20 Minuten bei 140°C (Objekttemperatur) eingebrannt.

Die erhaltene Mehrschichtlackierung entspricht in vollem Umfang den an eine Automobilerstlackierung gestellten Anforderungen.

### Beispiel 6 (erfindungsgemäß)

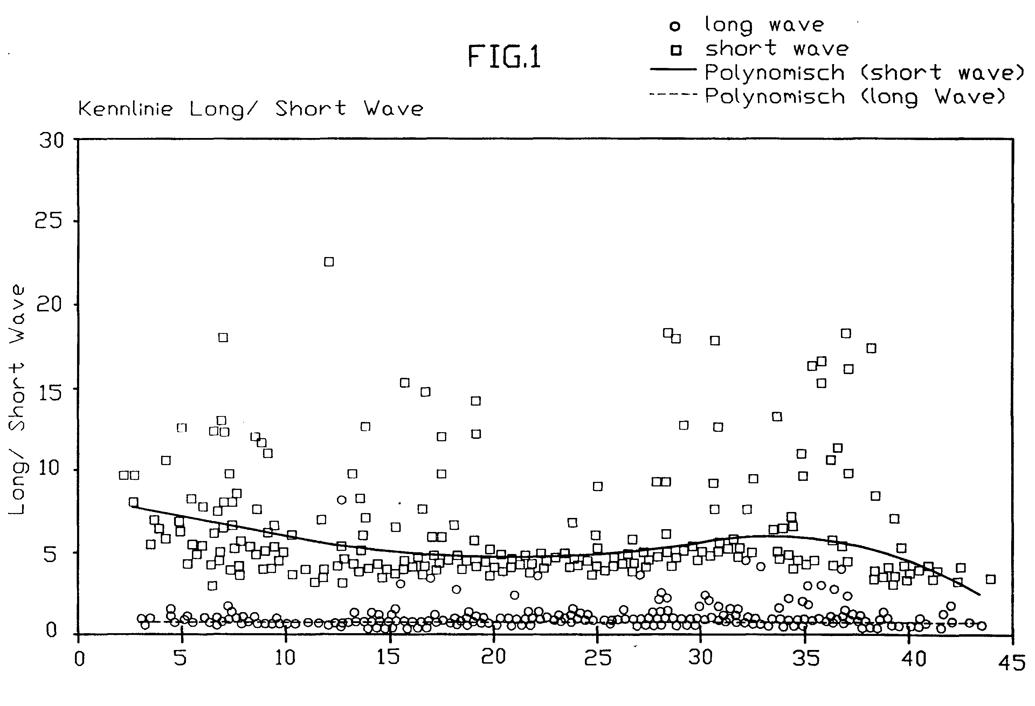

Mit in der Automobilserienlackierung verwendetem handelsüblichem kathodisch abscheidbarem Elektrotauchlack (KTL, 18 µm Trockenschichtdicke) vorbeschichtete Karosseriebleche werden hängend mit dem weißen wäßrigen Überzugsmittel aus Beispiel 4 im Keil elektrostatisch lackiert. Nach 5 min. Ablüften bei 80°C wird 20 min. bei 140°C eingebrannt. Danach wird mit einem handelsüblichen Zweikomponenten-PU-Klarlack durch Druckluftspritzen in einer Trockenschichtdicke von 40 µm überlackiert und 30 min. bei 130°C (Objekttemperatur) eingebrannt. Die beigefügte **Figur 1** zeigt ein Korrelationsdiagramm, in dem die Meßwerte für die Lang- und für die Kurzwelligkeit (Long/Short Wave) der äußeren Klarlackoberfläche als Funktion der Schichtdicke der weißen Lackschicht (in µm; Abszisse) dargestellt sind. Die Erzeugung des Korrelationsdiagramms erfolgte gemäß der Verfahrensweise der DE-Patentanmeldung P 196 05 520.2 unter Verwendung des Meßgeräts Wave-Scan (vgl. European Coatings Journal Nr. 1-2 (1995), Seite 32-35) von BYK-Gardner.

### Beispiel 7 (Vergleichsbeispiel)

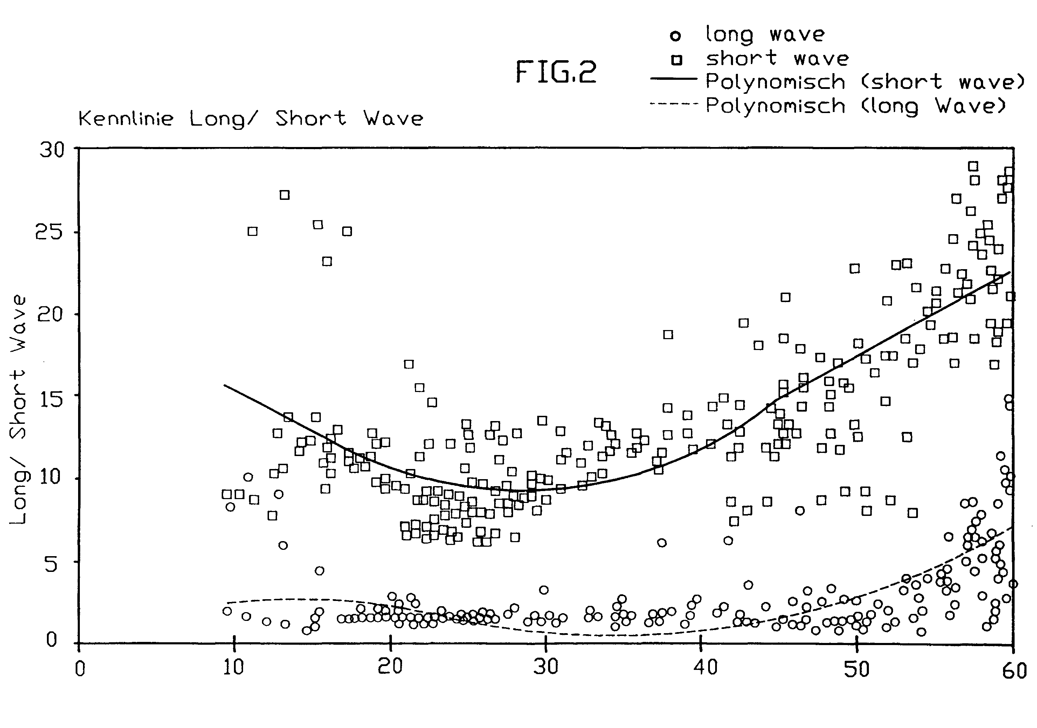

Mit in der Automobilserienlackierung verwendetem handelsüblichem kathodisch abscheidbarem Elektrotauchlack (KTL, 18 µm Trockenschichtdicke) und handelsüblichem weißem Füller (35 µm Trockenschichtdicke) vorbeschichtete Karosseriebleche werden hängend mit einem handelsüblichen weißen Wasserbasislack im Keil elektrostatisch lackiert. Nach 5 min. Ablüften bei 80°C wird 20 min. bei 140°C eingebrannt. Danach wird mit einem handelsüblichen Zweikomponenten-PU-Klarlack durch Druckluftspritzen in einer Trockenschichtdicke von 40 µm überlackiert und 30 min. bei 130°C (Objekttemperatur) eingebrannt. Die beigefügte **Figur 2** zeigt ein Korrelationsdiagramm, in dem die Meßwerte für die Lang- und für die Kurzwelligkeit (Long/Short Wave) der äußeren Klarlackoberfläche als Funktion der Schichtdicke der weißen Wasserbasislackschicht (in µm; Abszisse) dargestellt sind. Die Erzeugung des Korrelationsdiagramms erfolgte gemäß der Verfahrensweise der DE-Patentanmeldung P 196 05 520.2 unter Verwendung des Meßgeräts Wave-Scan von BYK Gardner.

### Herstellung von Effektmehrschichtlackierungen

### Beispiel 8 (erfindungsgemäß)

Unter dem Dissolver werden 6 Teile der wäßrigen Polymerisatdispersion aus DE-A-36 28 124, Herstellungsbeispiel 1, 16 Teile wäßrige Polyurethandispersion aus DE-A-42 24 617, Herstellungsbeispiel 2 und 17,5 Teile deionisiertes Wasser vermischt. Anschließend werden 6,5 Teile eines mit Dimethylethanolamin neutralisierten sauren Acrylatverdickers, 2 Teile Netzmittel und 2 Teile Butylglykol homogen eingerührt. Es werden 20 Teile einer wäßrigen Aluminium-Effektpigmentpaste auf Basis der wäßrigen Polyurethandispersion aus DE-A-42 24 617, Herstellungsbeispiel 2 und der wäßrigen Polymerisatdispersion aus DE-A-36 28 124, Herstellungsbeispiel 1 im Festkörpergewichtsverhältnis 1,2 : 1 (Pigment/Bindemittel-Gewichtsverhältnis 0,8 : 1, Fetkörpergehalt 29 Gew.-%, Lösemittelgehalt: 20 Gew.-% Butylglykol und 5 Gew.-% N-Methylpyrrolidon) und 2 Teile Polypropylenglykol (Hydroxylzahl 280 mg KOH/g) zugemischt. Anschließend wird mit 24 Teilen deionisiertem Wasser und 4 Teilen n-Butanol verdünnt. Man erhält einen silberfarbenen Effektwasserbasislack. Mit in der Automobilserienlackierung verwendetem handelsüblichem kathodisch abscheidbarem Elektrotauchlack (KTL, 18 µm Trockenschichtdicke) vorbeschichtete Karosseriebleche werden hängend in 30 µm Trockenschichtdicke mit dem weißen wäßrigen Überzugsmittel aus Beispiel 4 elektrostatisch lackiert. Nach 5 Minuten Ablüften bei 80°C wird 15 Minuten bei 165°C eingebrannt.

Auf die eingebrannte weiße Lackschicht wird der silberfarbene Effektwasserbasislack in senkrechter Position in 10 µm Trockenschichtdicke durch Druckluftspritzen aufgebracht und nach 5 Minuten Ablüften bei 80°C mit einem handelsüblichen Zweikomponenten-PU-Klarlack in einer Trockenschichtdicke von 40 µm überlackiert und 20 Minuten bei 140°C (Objekttemperatur) eingebrannt.

Die erhaltene Mehrschichtlackierung entspricht in vollem Umfang den an eine Automobilerstlackierung gestellten Anforderungen.

Das so hergestellte mit einem erfindungsgemäßen Mehrschichtlackaufbau versehene Blech wurde mit dem von BYK-GARDNER vertriebenen Meßgerät "Wave-Scan" vermessen (vgl. European Coatings Journal Nr. 1-2 (1995), Seite 32-35). Für die äußere Klarlackoberfläche ergab sich ein Wert für die Langwelligkeit von 16,9 und für die Kurzwelligkeit von 13,6.

### Beispiel 9 (Vergleichsbeispiel)

Beispiel 8 wird wiederholt mit dem Unterschied, daß anstelle des weißen wäßrigen Überzugsmittels aus Beispiel 4 ein handelsüblicher weißer Hydrofüller verwendet wird.

Die erhaltene Mehrschichtlackierung entspricht in vollem Umfang den an eine Automobilerstlackierung gestellten Anforderungen.

Das so hergestellte mit einem typischen Autoserieneffektlackaufbau versehene Blech wurde mit dem von BYK-GARDNER vertriebenen Meßgerät "Wave Scan" vermessen. Für die äußere Klarlackoberfläche ergab sich ein Wert für die Langwelligkeit von 30,8 und für die Kurzwelligkeit von 16,9.

## Patentansprüche

1. Verfahren zur Mehrschichtlackierung eines elektrisch leitfähigen Substrats durch elektrophoretischen Auftrag einer Grundierung, Einbrennen der erhaltenen Grundierungsschicht, direktes Aufbringen einer farb- und/oder effektgebenden Überzugsschicht auf die eingebrannte Grundierungsschicht und weiteres Überlackieren der farb- und/oder effektgebenden Überzugsschicht, **dadurch gekennzeichnet, daß** die farb- und/oder effektgebende Überzugsschicht aus einem wäßrigen, Farb- und/oder Effektpigmente enthaltenden Überzugsmittel erstellt wird, das als Bindemittel enthält:
A) 50 bis 85 Gew.-% eines oder mehrerer Hybridbindemittel auf der Basis von Polyestern sowie (Meth)acrylcopolymerisaten mit einer Hydroxylzahl von 100 bis 350 mg KOH/g und einer Säurezahl von 20 bis 60 mg KOH/g,
B) 0 bis 20 Gew.-% eines oder mehrerer von A) unterschiedlicher Bindemittel,
C) 15 bis 50 Gew.-% eines oder mehrerer freier oder blockierter Polyisocyanate und/oder einer oder mehrerer mit den Hydroxylgruppen der Komponente A) unter Ether- und/oder Estergruppenbildung vernetzenden Komponenten auf Triazinbasis,
wobei die Summe der Komponenten A), B) und C) sich auf 100 Gew.-% Bindemittelfestkörper ergänzt, und wobei mindestens 50 Gew.-% der (Meth)acryl-Copolymerisate der Komponente A) in Gegenwart von mindestens 20 Gew.-% des oder der Polyester der Komponente A) hergestellt worden sind.

2. Verfahren nach Anspruch 1, **dadurch gekennzeichnet, daß** die farb- und/oder effektgebende Überzugsschicht mit einer effektgebenden und gegebenenfalls farbgebenden Basislackschicht überlackiert und die Basislackschicht weiter mit einer Klarlackschicht überlackiert wird.

3. Verfahren nach Anspruch 2, **dadurch gekennzeichnet, daß** die direkt auf die eingebrannte Grundierungsschicht aufgebrachte Überzugsschicht farbgebend pigmentiert ist und mit einer effektgebend pigmentierten Basislackschicht überlackiert wird.

4. Verfahren nach Anspruch 2 oder 3, **dadurch gekennzeichnet, daß** die Basislackschicht farb- und effektgebend ist und in ihrem Farbton mit der direkt auf die eingebrannte Grundierungsschicht aufgetragenen farb- und/oder effektgebenden Überzugsschicht abgestimmt wird.

5. Verfahren nach Anspruch 1, **dadurch gekennzeichnet, daß** die farb- und/oder effektgebende Überzugsschicht mit einer Klarlackschicht überlackiert wird.

6. Verfahren nach einem der Ansprüche 1 bis 5, **dadurch gekennzeichnet, daß** die Hybridbindemittel A) aus 30 bis 95 Gew.-% (Meth)acrylcopolymerisat und 5 bis 70 Gew.-% Polyester bestehen.

7. Verfahren nach einem der Ansprüche 1 bis 6, **dadurch gekennzeichnet, daß** die Hybridbindemittel A) eine Hydroxylzahl von 120 bis 200 mg KOH/g aufweisen.

8. Verfahren nach einem der Ansprüche 1 bis 7, **dadurch gekennzeichnet, daß** die Hybridbindemittel A) eine Säurezahl von 25 bis 40 mg KOH/g aufweisen.

9. Verfahren nach einem der Ansprüche 1 bis 6, **dadurch gekennzeichnet, daß** die Hybridbindemittel A) erhältlich sind durch radikalische Polymerisation eines oder mehrerer Ester ungesättigter Carbonsäuren mit hydrophoben und hydrophilen Anteilen in Gegenwart eines oder mehrerer hydroxyfunktioneller Polyester, wobei die hydrophoben Anteile auf monomeren Estern ungesättigter Carbonsäuren mit sekundären OH-Gruppen basieren, die im Gemisch mit OH-Gruppen-freien Comonomeren vorliegen können und die hydrophilen Anteile auf monomeren Estern ungesättigter Carbonsäuren mit primären OH-Gruppen basieren, die im Gemisch mit OH-Gruppen-freien Comonomeren vorliegen können.

10. Verwendung des Verfahrens nach einem der vorhergehenden Ansprüche zur Serienlackierung von Substraten.

11. Verwendung des Verfahrens nach einem der vorhergehenden Ansprüche zur Serienlackierung von Kraftfahrzeugen oder deren Teilen.

12. Verwendung des Verfahrens nach einem der vorhergehenden Ansprüche zur Serienlackierung von unifarbenem und effektgebend lackierten Substraten durchgeführt wird, **dadurch gekennzeichnet, daß** in einer Serienlackieranlage unifarben pigmentierte wäßrige Überzugsmittel mit einem Bindemittel, wie in einem der Ansprüche 1 und 6 bis 9 definiert auf die grundierten Substrate aufgebracht und je nach Bedarf mit einem Klarlack oder einem effektgebenden Basislack und anschließend einem Klarlack überlackiert werden.

13. Verwendung nach Anspruch 12, **dadurch gekennzeichnet, daß** der effektgebende Basislack auch farbgebende Pigmente enthält und in seinem Farbton auf das unifarben pigmentierte Überzugsmittel eingestellt ist.

## Claims

1. Process for the multi-layer lacquering of an electrically conductive substrate by the electrophoretic application of a primer, stoving of the resulting primer layer, direct application of a colour- and/or effect-giving coating layer to the stoved primer layer, and further covering of the colour- and/or effect-giving coating layer, **characterised in that** the colour- and/or effect-giving coating layer is produced from an aqueous coating composition which contains colouring and/or effect pigments and which contains as binder:
A) from 50 to 85 wt.% of one or more hybrid binders based on polyesters and (meth)acrylic copolymers and having a hydroxyl number of from 100 to 350 mg KOH/g and an acid number of from 20 to 60 mg KOH/g,
B) from 0 to 20 wt.% of one or more binders other than A),
C) from 15 to 50 wt.% of one or more free or blocked polyisocyanates and/or one or more triazine-based components that crosslink with the hydroxyl groups of component A) with formation of ether and/or ester groups,
wherein the sum of components A), B) and C) comes to 100 wt.% binder solids, and wherein at least 50 wt.% of the (meth)acrylic copolymers of component A) have been prepared in the presence of at least 20 wt.% of the polyester(s) of component A).

2. Process according to claim 1, **characterised in that** the colour- and/or effect-giving coating layer is covered with an effect-giving and optionally colour-giving base lacquer layer, and the base lacquer layer is further covered with a clear lacquer layer.

3. Process according to claim 2, **characterised in that** the coating layer applied directly to the stoved primer layer is pigmented with colour-giving pigments and is covered with a base lacquer layer pigmented with effect-giving pigments.

4. Process according to claim 2 or 3, **characterised in that** the base lacquer layer is colour- and effect-giving and is matched in terms of its colour shade with the colour- and/or effect-giving coating layer applied directly to the stoved primer layer.

5. Process according to claim 1, **characterised in that** the colour- and/or effect-giving coating layer is covered with a clear lacquer layer.

6. Process according to any one of claims 1 to 5, **characterised in that** the hybrid binders A) consist of from 30 to 95 wt.% (meth)acrylic copolymer and from 5 to 70 wt.% polyester.

7. Process according to any one of claims 1 to 6, **characterised in that** the hybrid binders A) have a hydroxyl number of from 120 to 200 mg KOH/g.

8. Process according to any one of claims 1 to 7, **characterised in that** the hybrid binders A) have an acid number of from 25 to 40 mg KOH/g.

9. Process according to any one of claims 1 to 6, **characterised in that** the hybrid binders A) are obtainable by free-radical polymerisation of one or more esters of unsaturated carboxylic acids having hydrophobic and hydrophilic components in the presence of one or more hydroxy-functional polyesters, the hydrophobic components being based on monomeric esters of unsaturated carboxylic acids having secondary OH groups, which may be in admixture with comonomers that are free of OH groups, and the hydrophilic components being based on monomeric esters of unsaturated carboxylic acids having primary OH groups, which may be present in admixture with comonomers that are free of OH groups.

10. Use of the process according to any one of the preceding claims for the series lacquering of substrates.

11. Use of the process according to any one of the preceding claims for the series lacquering of motor vehicles or parts thereof.

12. Use of the process according to any one of the preceding claims for the series lacquering of substrates lacquered with self-coloured and effect-giving lacquers, **characterised in that**, in a series lacquering plant, aqueous coating compositions pigmented with self-coloured pigments and containing a binder as defined in any one of claims 1 to 6 and 9 are applied to the primed substrates and, as required, are covered with a clear lacquer or with an effect-giving base lacquer and then with a clear lacquer.

13. Use according to claim 12, **characterised in that** the effect-giving base lacquer also contains colour-giving pigments and is adjusted in terms of its colour shade to the coating composition pigmented with self-coloured pigments.

## Revendications

1. Procédé de peinture multicouchc appliquée sur un substrat électriquement conducteur, par application électrophorétique d'une couche de fond, par le séchage au four de la couche de fond obtenue, par l'application directe d'une couche de revêtement donnant une couleur et/ou un effet sur la couche de fond séchée au four, et par un autre laquage de la couche de revêtement donnant une couleur et/ou un effet, **caractérisé en ce que** la couche de revêtement donnant une couleur et/ou un effet est obtenue à partir d'un revêtement aqueux (I) contenant un pigment de couleur et/ou un pigment à effet, lequel revêtement aqueux contient comme liants :
A) comprenant entre 50 % en poids et 85 % en poids d'un ou de plusieurs liants hybrides à base de polyesters ainsi que des produits de copolymérisation (méth)acryliques ayant un indice hydroxyle compris entre 100 mg KOH/g et 350 mg KOH/g et un indice d'acide compris entre 20 mg KOH/g et 60 mg KOH/g,
B) comprenant entre 0 % en poids et 20 % en poids d'un ou de plusieurs liants différents de A),
C) comprenant entre 15 % en poids et 50 % en poids d'un ou de plusieurs polyisocyanates libres ou séquencés et/ou un ou plusieurs des composants à base de triazine réticulant par formation de groupes d'éthers et/ou d'esters avec des groupes hydroxyles du composant A),
où la somme des composants A), B) et C) est complétée pour atteindre 100 % en poids de solides de liants, et où au moins 50 % en poids des produits de copolymérisation (méth)acryliques du composant A) ont été fabriqués en présence d'au moins 20 % en poids du ou des polyesters du composant A).

2. Procédé selon la revendication 1, **caractérisé en ce que** la couche de revêtement donnant une couleur et/ou un effet est laquée avec une couche de peinture de base donnant un effet et, le cas échéant, une couleur, la couche de peinture de base étant en outre vernie avec une couche de vernis clair.

3. Procédé selon la revendication 2, **caractérisé en ce que** la couche de revêtement appliquée directement sur la couche de fond séchée au four est pigmentée en donnant une couleur et est laquée avec une couche de peinture de base pigmentée donnant un effet.

4. Procédé selon la revendication 2 ou 3, **caractérisé en ce que** la couche de peinture de base est une peinture donnant une couleur et un effet et, concernant sa teinte, est en accord avec la couche de revêtement donnant une couleur et/ou un effet appliquée directement sur la couche de fond séchée au four.

5. Procédé selon la revendication 1, **caractérisé en ce que** la couche de revêtement donnant une couleur et/ou un effet est vernie avec une couche de vernis clair.

6. Procédé selon l'une quelconque des revendications 1 à 5, **caractérisé en ce que** les liants hybrides A) se composent entre 30 % en poids et 95 % en poids d'un produit de copolymérisation (méth)acrylique et entre 5 % en poids et 70 % en poids de polyester.

7. Procédé selon l'une quelconque des revendications 1 à 6, **caractérisé en ce que** les liants hybrides A) ont un indice hydroxyle compris entre 120 mg KOH/g et 200 mg KOH/g.

8. Procédé selon l'une quelconque des revendications 1 à 7, **caractérisé en ce que** les liants hybrides A) ont un indice d'acide compris entre 25 mg KOH/g et 40 mg KOH/g.

9. Procédé selon l'une quelconque des revendications 1 à 6, **caractérisé en ce que** les liants hybrides A) sont obtenus par polymérisation radicalaire d'un ou de plusieurs esters d'acides carboxyliques insaturés avec des parties hydrophobes et hydrophiles, en présence d'un ou de plusieurs polyesters à fonction hydroxyle, où les parties hydrophobes sont à base d'esters monomères d'acides carboxyliques insaturés, avec des groupes hydroxyles (OH) secondaires, lesquelles parties hydrophobes peuvent être présentes, dans le mélange, avec des comonomères libres à groupes hydroxyles (OH) et où les parties hydrophiles sont à base d'esters monomères d'acides carboxyliques insaturés, avec des groupes hydroxyles (OH) primaires, lesquelles parties hydrophiles peuvent être présentes, dans le mélange, avec des comonomères libres à groupes hydroxyles (OH).

10. Utilisation du procédé selon l'une quelconque des revendications précédentes servant à la peinture en série de substrats.

11. Utilisation du procédé selon l'une quelconque des revendications précédentes, pour la peinture en série de véhicules automobiles ou de leurs pièces.

12. Utilisation du procédé selon l'une quelconque des revendications précédentes, pour la peinture en série de substrats peints avec une peinture unicolore et donnant un effet, **caractérisée en ce que**, dans une installation de peinture en série, des revêtements aqueux pigmentés de façon unicolore, comprenant un liant, comme défini dans l'une des revendications 1 et 6 à 9, sont appliqués sur les substrats ayant reçu une couche de fond et, en fonction des besoins, sont vernis avec un vernis clair ou laqués avec une peinture de base donnant un effet, puis vernis avec un vernis clair.

13. Utilisation selon la revendication 12, **caractérisée en ce que** la peinture de base donnant un effet contient également des pigments donnant une couleur et **en ce que**, concernant sa teinte, la peinture de base est en accord avec le revêtement pigmenté de façon unicolore.
